# EUROPEAN PATENT APPLICATION

(11) **EP 4 618 220 A1**
(43) Date of publication of application: **17.09.2025**
(21) Application number: 23888797.0
(22) Date of filing: 10.11.2023
(51) Int. Cl.: H01M 10/0567, H01M 10/054, H01M 10/0568, H01M 10/0569, H01M 10/058

(54) **ELECTROLYTIC SOLUTION FOR NON-AQUEOUS SODIUM ION BATTERIES, NON-AQUEOUS SODIUM ION BATTERY, AND METHOD FOR PRODUCING NON-AQUEOUS SODIUM ION BATTERY**

(30) Priority: 11.11.2022 JP 2022181330
(71) Applicant: Central Glass Company, Limited, Ube-shi, Yamaguchi 755-0001 (JP)
(72) Inventor: KAWAHARA Kei, Tokyo 101-0054 (JP); SHIMIZU Genki, Tokyo 101-0054 (JP); MORINAKA Takayoshi, Tokyo 101-0054 (JP); TAKAHASHI Mikihiro, Tokyo 101-0054 (JP)
(74) Representative: Mewburn Ellis LLP
(86) International application number: PCT/JP2023/040643
(87) International publication number: WO 2024/101452

(57) **Abstract**

The present disclosure provides an electrolyte solution for a nonaqueous sodium ion battery containing (I) a fluorosulfate, (II) at least one selected from the group consisting of a compound having at least two isocyanate groups, a specific compound represented by the formula (1), a specific compound represented by the formula (2), and a specific compound represented by the formula (5), (III) a sodium salt, and (IV) a nonaqueous solvent, a nonaqueous sodium ion battery having at least a positive electrode, a negative electrode, and the electrolyte solution for a nonaqueous sodium ion battery, and a method for producing a nonaqueous sodium ion battery.

## Description

### TECHNICAL FIELD

One embodiment of the present disclosure relates to an electrolyte solution for a nonaqueous sodium ion battery, a nonaqueous sodium ion battery using the same, and a method for producing a nonaqueous sodium ion battery.

### BACKGROUND ART

In recent years, lithium ion batteries are attracting attention as power storage systems for information-related devices and communication devices, that is, power storage systems for compact and high-energy-density applications such as personal computers, video cameras, digital still cameras, and mobile phones and power storage systems for large-scale power applications such as electric vehicles, hybrid vehicles, auxiliary power sources for fuel cell vehicles, and power storage On the other hand, the price of lithium has increased, and a sodium ion battery, which is less expensive, has attracted attention as a next generation secondary battery (Patent Literature 1).

In nonaqueous sodium ion batteries, it has been proposed to prevent deterioration due to decomposition of the electrolyte solution on the surfaces of active positive and negative electrodes with a variety of additives. Patent Literature 2 discloses a nonaqueous electrolyte solution for a sodium secondary battery having an improved charge-discharge cycle characteristic by containing a compound having a -(S=O)- bond such as a sulfonic acid ester compound (for example, methylenebis(benzenesulfonate), methylenebis(2-trifluoromethylbenzenesulfonate), and methylbenzenesulfonate) or a sulfoxide compound (for example, dimethyl sulfoxide).

On the other hand, Patent Literatures 3 and 4 disclose that addition of a fluorosulfate to a nonaqueous lithium ion battery electrolyte solution improves high-temperature durability and an output characteristic.

### CITATION LIST

### PATENT LITERATURE

Patent Literature 1: JP2013-48077A
Patent Literature 2: JP2016-181467A
Patent Literature 3: JP2011-187440A
Patent Literature 4: WO2018/179884

### SUMMARY OF INVENTION

### TECHNICAL PROBLEM

A nonaqueous sodium ion battery has already been put into practical use, but as a result of studies performed by the inventors of the present invention, it has been found that there is room for improvement in terms of a cycle characteristic, (an effect of preventing) a gas generation amount during a high-temperature cycle test, and a high-temperature storage characteristic in applications where the nonaqueous sodium ion battery is used at a high temperature for a long period of time, such as automobiles.

Therefore, an object of one embodiment of the present disclosure is to provide an electrolyte solution for a nonaqueous sodium ion battery capable of improving at least one of a cycle characteristic at a high temperature of 60°C or higher, (an effect of preventing) a gas generation amount during a high-temperature cycle test, and a high-temperature storage characteristic of the nonaqueous sodium ion battery, a nonaqueous sodium ion battery using the same, and a method for producing a nonaqueous sodium ion battery.

### SOLUTION TO PROBLEM

As a result of intensive studies in view of such a problem, the inventors of the present invention have found that an electrolyte solution for a nonaqueous sodium ion battery capable of improving at least one selected from the group consisting of a cycle characteristic at a high temperature of 60°C or higher, (an effect of preventing) a gas generation amount during a high-temperature cycle test, and a high-temperature storage characteristic of the nonaqueous sodium ion battery can be obtained using an electrolyte solution for a nonaqueous sodium ion battery containing (I) a fluorosulfate, (II) at least one selected from the group consisting of a compound having at least two isocyanate groups, a compound represented by the following formula (1), a compound represented by the following formula (2), and a compound represented by the following formula (5), (III) a sodium salt, and (IV) a nonaqueous solvent, and the inventors have thus completed the present disclosure.

That is, the present disclosure includes the following embodiments.
[1] An electrolyte solution for a nonaqueous sodium ion battery containing
   (I) a fluorosulfate,
   (II) at least one selected from the group consisting of a compound having at least two isocyanate groups, a compound represented by the following formula (1), a compound represented by the following formula (2), and a compound represented by the following formula (5),
   (III) a sodium salt, and
   (IV) a nonaqueous solvent.

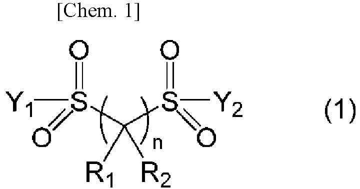

[In the formula (1), n represents an integer of 1-4.

R₁ and R₂ each independently represent a hydrogen atom, a halogen atom, a hydrocarbon group having 1 to 10 carbon atoms (the hydrocarbon group may have at least one selected from the group consisting of a heteroatom and a halogen atom and may have a branched chain or a cyclic structure when the number of carbon atoms is 3 or more), an alkoxy group having 1 to 10 carbon atoms, an alkenyloxy group having 2 to 10 carbon atoms, an alkynyloxy group having 2 to 10 carbon atoms, a cycloalkoxy group having 3 to 10 carbon atoms, a cycloalkenyloxy group having 3 to 10 carbon atoms, or an aryloxy group having 6 to 10 carbon atoms.

Y₁ and Y₂ each independently represent a halogen atom, a hydrocarbon group having 1 to 10 carbon atoms (the hydrocarbon group may have at least one selected from the group consisting of a heteroatom and a halogen atom and may have a branched chain or a cyclic structure when the number of carbon atoms is 3 or more), an alkoxy group having 1 to 10 carbon atoms, an alkenyloxy group having 2 to 10 carbon atoms, an alkynyloxy group having 2 to 10 carbon atoms, a cycloalkoxy group having 3 to 10 carbon atoms, a cycloalkenyloxy group having 3 to 10 carbon atoms, an aryloxy group having 6 to 10 carbon atoms, or -O⁻(M₁^{A+})ₐ, M₁^{A+} represents a proton, a metal cation, or an onium cation, and A represents a valence of the cation. a represents a number satisfying A × a = 1.]

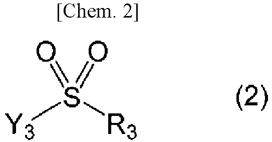

[In the formula (2), R₃ represents a hydrocarbon group having 1 to 10 carbon atoms (the hydrocarbon group may have at least one selected from the group consisting of a heteroatom and a halogen atom and may have a branched chain or a cyclic structure when the number of carbon atoms is 3 or more), an alkoxy group having 1 to 10 carbon atoms (the alkoxy group may have a halogen atom), an alkenyloxy group having 2 to 10 carbon atoms, an alkynyloxy group having 2 to 10 carbon atoms, a cycloalkoxy group having 3 to 10 carbon atoms, a cycloalkenyloxy group having 3 to 10 carbon atoms, an aryloxy group having 6 to 10 carbon atoms, or -O⁻(M₂^{B+})_{b}, M₂^{B+} represents a proton, a metal cation, or an onium cation, and B represents the valence of the cation. b represents a number satisfying B × b = 1.

Y₃ represents a halogen atom, a hydrocarbon group having 1 to 10 carbon atoms (the hydrocarbon group may have at least one selected from the group consisting of a heteroatom and a halogen atom and may have a branched chain or a cyclic structure when the number of carbon atoms is 3 or more), an alkoxy group having 1 to 10 carbon atoms (the alkoxy group may have a halogen atom), an alkenyloxy group having 2 to 10 carbon atoms, an alkynyloxy group having 2 to 10 carbon atoms, a cycloalkoxy group having 3 to 10 carbon atoms, a cycloalkenyloxy group having 3 to 10 carbon atoms, an aryloxy group having 6 to 10 carbon atoms, or -O⁻(M₃^{E+})ₑ, M₃^{E+} represents a proton, a metal cation, or an onium cation, and E represents the valence of the cation. e represents a number satisfying E × e = 1.]

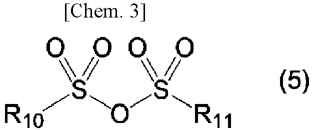

[In the formula (5), R₁₀ and R₁₁ each independently represent a hydrogen atom, a halogen atom, a hydrocarbon group having 1 to 10 carbon atoms (the hydrocarbon group may have a heteroatom or a halogen atom and may have a branched chain or a cyclic structure when the number of carbon atoms is 3 or more), an alkoxy group having 1 to 10 carbon atoms (the alkoxy group may have a halogen atom), an alkenyloxy group having 2 to 10 carbon atoms, an alkynyloxy group having 2 to 10 carbon atoms, a cycloalkoxy group having 3 to 10 carbon atoms, a cycloalkenyloxy group having 3 to 10 carbon atoms, an aryloxy group having 6 to 10 carbon atoms, or -O⁻(M₅^{G+})_{g}, M₅^{G+} represents a proton, a metal cation, or an onium cation, and G represents a valence of the cation. g represents a number satisfying G × g = 1. R₁₀ and R₁₁ may be bonded to each other to form a cyclic structure.]

[2]
The electrolyte solution for a nonaqueous sodium ion battery according to [1], in which the content x of (I) satisfies 0.008 mass% ≤ x ≤ 7.5 mass% with respect to a total amount of the electrolyte solution for a nonaqueous sodium ion battery.

[3]
The electrolyte solution for a nonaqueous sodium ion battery according to [1] or [2], in which the counter cation of (I) is a lithium ion, a sodium ion, a potassium ion, a tetraalkylammonium ion, a tetraalkylphosphonium ion, or an ammonium ion having a spiro skeleton.

[4]
The electrolyte solution for a nonaqueous sodium ion battery according to any one of [1] to [3], in which the content y of (II) satisfies 0.08 mass% ≤ y ≤ 5.5 mass% with respect to a total amount of the electrolyte solution for a nonaqueous sodium ion battery.

[5]
The electrolyte solution for a nonaqueous sodium ion battery according to any one of [1] to [4], in which the compound having at least two isocyanate groups is at least one selected from the group consisting of pentamethylene diisocyanate and hexamethylene diisocyanate.

[6]
The electrolyte solution for a nonaqueous sodium ion battery according to any one of [1] to [5], in which the compound represented by the formula (1) is at least one selected from the group consisting of CH₂(SO₂F)₂, CH₂(SO₂F)(SO₂ONa), CH₂(SO₂F)(SO₂OCH₃), C(CH₃)₂(SO₂F)₂, C(F)₂(SO₂F)₂, CH₂CH₂(SO₂F)₂, CF₂CF₂(SO₂F)₂, CH₂CH₂(SO₂F)(SO₂OLi), CH₂CH₂(SO₂F)(SO₂OCH₂CCH), CH₂(SO₂CF₃)₂, CH₂(SO₂CF₃)(SO₂ONa), and CH₂(SO₂CF₃)(SO₂OCH₃).

[7]
The electrolyte solution for a nonaqueous sodium ion battery according to any one of [1] to [6], in which the compound represented by the formula (1) is at least one selected from the group consisting of CH₂(SO₂F)₂, CH₂(SO₂F)(SO₂ONa), CH₂CH₂(SO₂F)₂, CH₂(SO₂CF₃)₂, and CH₂(SO₂CF₃)(SO₂ONa).

[8]
The electrolyte solution for a nonaqueous sodium ion battery according to any one of [1] to [7], in which the compound represented by the formula (2) is at least one selected from the group consisting of CH₃SO₂F, C₂H₅SO₂F, CH₂=CH-SO₂F, CF₃CH₂CH₂SO₂F, cyclohexylsulfonyl fluoride (C₆H₁₁SO₂F), phenylsulfonyl fluoride (C₆H₃SO₂F), CH₃OSO₂F, CH₃CH₂OSO₂F, CH₂=CH-OSO₂F, CF₃CH₂OSO₂F, (CH₃)₂CH-OSO₂F, (CF₃)₂CH-OSO₂F, CH₃CH₂SO₂CF₃, CH₂=CH-SO₂CF₃, CF₃CH₂CH₂SO₂CF₃, CH₃OSO₂CF₃, CH₃CH₂OSO₂CF₃, NaO-SO₂CH₃, and NaO-SO₂CF₃.

[9]
The electrolyte solution for a nonaqueous sodium ion battery according to any one of [1] to [8], in which the compound represented by the formula (2) is at least one selected from the group consisting of CH₃SO₂F, C₂H₅SO₂F, CH₂=CH-SO₂F, CH₃OSO₂F, CH₂=CH-OSO₂F, CH₃OSO₂CF₃, NaO-SO₂CH₃, and NaO-SO₂CF₃.

[10]
The electrolyte solution for a nonaqueous sodium ion battery according to any one of [1] to [9], in which the compound represented by the formula (5) is at least one selected from the group consisting of methanesulfonic anhydride, 1,2,5-oxadithiolane-2,2,5,5-tetraoxide, and 1,3,2,4-dioxadithiane-2,2,4,4-tetraoxide.

[11]
The electrolyte solution for a nonaqueous sodium ion battery according to any one of [1] to [10], containing at least one selected from the group consisting of a cyclic ester, a chain ester, a cyclic ether, and a chain ether as the nonaqueous solvent.

[12]
The electrolyte solution for a nonaqueous sodium ion battery according to any one of [1] to [11], in which the sodium salt is at least one selected from the group consisting of NaPF₆, NaBF₄, NaBF₂(C₂O₄), NaPF₄(C₂O₄), NaPF₂(C₂O₄)₂, NaSbF₆, NaAsF₆, NaClO₄, NaN(SO₂F)₂, NaN(SO₂CF₃)₂, NaN(SO₂F)(SO₂CF₃), NaN(CₐF₂ₐ₊₁SO₂)(C_{b}F_{2b+1}SO₂) (where a and b are integers satisfying 2 ≤ a ≤ 20 and 2 ≤ b ≤ 20), NaSO₃CF₃, NaSO₃C₄F₉, NaN(POF₂)₂, NaN(POF₂)(SO₂F), NaPO₂F₂, NaC(SO₂CF₃)₃, NaPF₃(C₃F₇)₃, NaB(CF₃)₄, NaBF₃(C₂F₅), NaAlO₂, NaAlCl₄, NaCl, and NaI.

[13]
The electrolyte solution for a nonaqueous sodium ion battery according to any one of [1] to [12], in which the concentration z of (III) satisfies 0.3 mol/L ≤ z ≤ 5.0 mol/L with respect to a total amount of the electrolyte solution for a nonaqueous sodium ion battery.

[14]
The electrolyte solution for a nonaqueous sodium ion battery according to any one of [1] to [13], further containing at least one compound selected from the group consisting of a compound represented by the following formula (3) and a compound represented by the following formula (4).

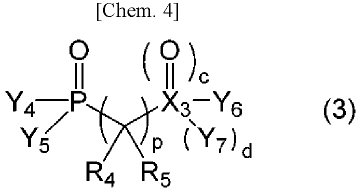

[In the formula (3), p represents an integer of 1-4.

R₄ and R₅ each independently represent a hydrogen atom, a halogen atom, a hydrocarbon group having 1 to 10 carbon atoms (the hydrocarbon group may have at least one selected from the group consisting of a heteroatom and a halogen atom and may have a branched chain or a cyclic structure when the number of carbon atoms is 3 or more), an alkoxy group having 1 to 10 carbon atoms, an alkenyloxy group having 2 to 10 carbon atoms, an alkynyloxy group having 2 to 10 carbon atoms, a cycloalkoxy group having 3 to 10 carbon atoms, a cycloalkenyloxy group having 3 to 10 carbon atoms, or an aryloxy group having 6 to 10 carbon atoms.

X₃ represents a phosphorus atom or a sulfur atom. When X₃ is a phosphorus atom, c = 1, and d = 1, and when X₃ is a sulfur atom, c = 2, and d = 0.

Y₄ to Y₇ each independently represent a halogen atom, a hydrocarbon group having 1-10 carbon atoms (the hydrocarbon group may have at least one selected from the group consisting of a heteroatom and a halogen atom and may have a branched chain or a cyclic structure when the number of carbon atoms is 3 or more), an alkoxy group having 1-10 carbon atoms, an alkenyloxy group having 2-10 carbon atoms, an alkynyloxy group having 2-10 carbon atoms, a cycloalkoxy group having 3-10 carbon atoms, a cycloalkenyloxy group having 3-10 carbon atoms, an aryloxy group having 6-10 carbon atoms, or -O⁻(M₄^{F+})_{f}, M₄^{F+} represents a proton, a metal cation, or an onium cation, and F represents a valence of the cation. f represents a number satisfying F × f = 1.]

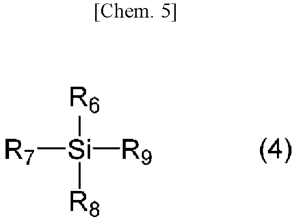

[In the formula (4), R₆ to R₉ each independently represent a hydrogen atom, a halogen atom, a hydrocarbon group having 1 to 10 carbon atoms (the hydrocarbon group may have at least one selected from the group consisting of a heteroatom and a halogen atom and may have a branched chain or a cyclic structure when the number of carbon atoms is 3 or more), an alkoxy group having 1 to 10 carbon atoms (the alkoxy group may have a halogen atom), an alkenyloxy group having 2 to 10 carbon atoms, an alkynyloxy group having 2 to 10 carbon atoms, a cycloalkoxy group having 3 to 10 carbon atoms, a cycloalkenyloxy group having 3 to 10 carbon atoms, or an aryloxy group having 6 to 10 carbon atoms.]

[15]
A nonaqueous sodium ion battery having at least a positive electrode, a negative electrode, and the electrolyte solution for a nonaqueous sodium ion battery according to any one of [1] to [14].

[16]
A method for producing a nonaqueous sodium ion battery, including
a step of preparing the electrolyte solution for a nonaqueous sodium ion battery according to any one of [1] to [14], and
a step of filling an empty cell, which has at least a positive electrode and a negative electrode, with the electrolyte solution for a nonaqueous sodium ion battery.

### ADVANTAGEOUS EFFECTS OF INVENTION

According to the embodiment of the present disclosure, an electrolyte solution for a nonaqueous sodium ion battery capable of improving at least one selected from the group consisting of a cycle characteristic at a high temperature of 60°C or higher, (an effect of preventing) a gas generation amount during a high-temperature cycle test, and a high-temperature storage characteristic of the nonaqueous sodium ion battery, a nonaqueous sodium ion battery using the same, and a method for producing a nonaqueous sodium ion battery are provided.

### BRIEF DESCRIPTION OF DRAWINGS

[FIG. 1] FIG. 1 shows evaluation results related to discharge capacity retention rates after a high-temperature cycle in Example 1-1 and Comparative Examples 1-0, 1-1, and 1-2.
[FIG. 2] FIG. 2 shows evaluation results related to gas generation amounts during a high-temperature cycle in Example 1-1 and Comparative Examples 1-0, 1-1, and 1-2.
[FIG. 3] FIG. 3 shows evaluation results related to recovered discharge capacity retention rates after high-temperature storage in Example 1-1 and Comparative Examples 1-0, 1-1, and 1-2.

### DESCRIPTION OF EMBODIMENTS

Hereinafter, each embodiment of the present disclosure will be explained. However, the present disclosure can be implemented in various aspects without departing from the gist thereof and should not be construed as being limited to the description of the embodiments or the Examples illustrated below. In addition, among other actions and effects different from the actions and effects brought about by the aspects of the following embodiments or Examples, the actions and effects obvious from the description of the present specification or the actions and effects easily predicted by a person skilled in the art are of course construed as being brought about by the present disclosure.

Ranges expressed with "-" in the present specification are used with the meanings including numerical values indicated before and after "-" as a lower limit value and an upper limit value.

### [1. Electrolyte Solution for Nonaqueous Sodium Ion Battery]

The electrolyte solution for a nonaqueous sodium ion battery according to an embodiment of the present disclosure contains
(I) a fluorosulfate (hereinafter, sometimes referred to as "component (I)" or simply "(I)"),
(II) at least one selected from the group consisting of a compound having at least two isocyanate groups, a compound represented by the following formula (1), a compound represented by the following formula (2), and a compound represented by the following formula (5) (hereinafter, sometimes referred to as "component (II)" or simply "(II)"),
(III) a sodium salt (hereinafter, sometimes referred to as "component (III)" or simply "(III)"), and
(IV) a nonaqueous solvent (hereinafter, sometimes referred to as "component (IV)" or simply "(IV)").

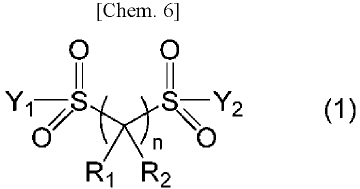

### [In the formula (1), n represents an integer of 1-4.

R₁ and R₂ each independently represent a hydrogen atom, a halogen atom, a hydrocarbon group having 1 to 10 carbon atoms (the hydrocarbon group may have at least one selected from the group consisting of a heteroatom and a halogen atom and may have a branched chain or a cyclic structure when the number of carbon atoms is 3 or more), an alkoxy group having 1 to 10 carbon atoms, an alkenyloxy group having 2 to 10 carbon atoms, an alkynyloxy group having 2 to 10 carbon atoms, a cycloalkoxy group having 3 to 10 carbon atoms, a cycloalkenyloxy group having 3 to 10 carbon atoms, or an aryloxy group having 6 to 10 carbon atoms.

Y₁ and Y₂ each independently represent a halogen atom, a hydrocarbon group having 1 to 10 carbon atoms (the hydrocarbon group may have at least one selected from the group consisting of a heteroatom and a halogen atom and may have a branched chain or a cyclic structure when the number of carbon atoms is 3 or more), an alkoxy group having 1 to 10 carbon atoms, an alkenyloxy group having 2 to 10 carbon atoms, an alkynyloxy group having 2 to 10 carbon atoms, a cycloalkoxy group having 3 to 10 carbon atoms, a cycloalkenyloxy group having 3 to 10 carbon atoms, an aryloxy group having 6 to 10 carbon atoms, or -O⁻(M₁^{A+})ₐ, M₁^{A+} represents a proton, a metal cation, or an onium cation, and A represents a valence of the cation. a represents a number satisfying A × a = 1.]

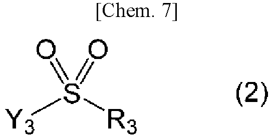

[In the formula (2), R₃ represents a hydrocarbon group having 1 to 10 carbon atoms (the hydrocarbon group may have at least one selected from the group consisting of a heteroatom and a halogen atom and may have a branched chain or a cyclic structure when the number of carbon atoms is 3 or more), an alkoxy group having 1 to 10 carbon atoms (the alkoxy group may have a halogen atom), an alkenyloxy group having 2 to 10 carbon atoms, an alkynyloxy group having 2 to 10 carbon atoms, a cycloalkoxy group having 3 to 10 carbon atoms, a cycloalkenyloxy group having 3 to 10 carbon atoms, an aryloxy group having 6 to 10 carbon atoms, or -O⁻(M₂^{B+})_{b}, M₂^{B+} represents a proton, a metal cation, or an onium cation, and B represents the valence of the cation. b represents a number satisfying B × b = 1.

Y₃ represents a halogen atom, a hydrocarbon group having 1 to 10 carbon atoms (the hydrocarbon group may have at least one selected from the group consisting of a heteroatom and a halogen atom and may have a branched chain or a cyclic structure when the number of carbon atoms is 3 or more), an alkoxy group having 1 to 10 carbon atoms (the alkoxy group may have a halogen atom), an alkenyloxy group having 2 to 10 carbon atoms, an alkynyloxy group having 2 to 10 carbon atoms, a cycloalkoxy group having 3 to 10 carbon atoms, a cycloalkenyloxy group having 3 to 10 carbon atoms, an aryloxy group having 6 to 10 carbon atoms, or -O⁻(M₃^{E+})ₑ, M₃^{E+} represents a proton, a metal cation, or an onium cation, and E represents the valence of the cation. e represents a number satisfying E × e = 1.]

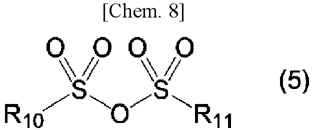

[In the formula (5), R₁₀ and R₁₁ each independently represent a hydrogen atom, a halogen atom, a hydrocarbon group having 1 to 10 carbon atoms (the hydrocarbon group may have a heteroatom or a halogen atom and may have a branched chain or a cyclic structure when the number of carbon atoms is 3 or more), an alkoxy group having 1 to 10 carbon atoms (the alkoxy group may have a halogen atom), an alkenyloxy group having 2 to 10 carbon atoms, an alkynyloxy group having 2 to 10 carbon atoms, a cycloalkoxy group having 3 to 10 carbon atoms, a cycloalkenyloxy group having 3 to 10 carbon atoms, an aryloxy group having 6 to 10 carbon atoms, or -O⁻(M₅^{G+})_{g}, M₅^{G+} represents a proton, a metal cation, or an onium cation, and G represents a valence of the cation. g represents a number satisfying G × g = 1. R₁₀ and R₁₁ may be bonded to each other to form a cyclic structure.]

Further, when necessary, it is possible to use other commonly known additives in combination.

The electrolyte solution for a nonaqueous sodium ion battery according to the present embodiment can improve at least one of a cycle characteristic at a high temperature of 60°C or higher, (an effect of preventing) a gas generation amount during a high-temperature cycle test, and a high-temperature storage characteristic by having the above configuration. Although the details of this mechanism are not clear, this is presumed to be because an excellent film can be formed on the electrode by containing the component (II) together with the fluorosulfate.

Hereinafter, each element of the electrolyte solution for a nonaqueous sodium ion battery according to the present embodiment will be explained in detail.

### [(I) Fluorosulfate]

The fluorosulfate is an ionic salt having an anion represented by SO₃F⁻ and a counter cation.

As the counter cation of the fluorosulfate, various counter cations can be selected without any particular restriction on the type thereof as long as the counter cation does not impair the performance of the electrolyte solution for a nonaqueous sodium ion battery and the nonaqueous sodium ion battery according to the present embodiment.

Specific examples of the counter cation include metal cations such as a lithium ion, a sodium ion, a potassium ion, a rubidium ion, a cesium ion, a magnesium ion, a calcium ion, a barium ion, a silver ion, a copper ion, and an iron ion, and onium cations such as a tetraalkylammonium ion, a tetraalkylphosphonium ion, an imidazolium ion, and an ammonium ion having a spiro skeleton. In particular, from a viewpoint of playing the role of helping ionic conduction in the nonaqueous sodium ion battery, a lithium ion, a sodium ion, a potassium ion, a tetraalkylammonium ion, a tetraalkylphosphonium ion, or an ammonium ion having a spiro skeleton is preferable, and a lithium ion, a sodium ion, a tetraalkylammonium ion, or an ammonium ion having a spiro skeleton is more preferable.

The numbers of carbon atoms in the alkyl groups in the tetraalkylammonium ion are preferably 1 to 6, and the numbers of carbon atoms in the alkyl groups in the tetraalkylphosphonium ion are preferably 1 to 6.

The four alkyl groups in the tetraalkylammonium ion may be the same or different from each other, and the four alkyl groups in the tetraalkylphosphonium ion may be the same or different from each other.

The ammonium ion having a spiro skeleton is preferably, for example, 5-azoniaspiro[4.4]nonane.

The fluorosulfate is not particularly limited but is preferably NaSO₃F, LiSO₃F, TEMASO₃F, SBPSO₃F, or TEASO₃F, and particularly preferably NaSO₃F, LiSO₃F, or TEASO₃F. Here, TEA represents tetraethylammonium, TEMA represents triethyl methyl ammonium, and SBP represents 5-azoniaspiro[4.4]nonane.

The fluorosulfate content x is not particularly limited but is preferably 0.001 mass% or more, more preferably 0.008 mass% or more, more preferably 0.08 mass% or more, and further preferably 1.5 mass% or more with respect to a total amount of the electrolyte solution for a nonaqueous sodium ion battery. Further, the fluorosulfate content is not particularly limited but is preferably 11.5 mass% or less, more preferably 10.5 mass% or less, further preferably 7.5 mass% or less, and particularly preferably 5.5 mass% or less with respect to the total amount of the electrolyte solution for a nonaqueous sodium ion battery. When the content is 0.001 mass% or more, at least one of the cycle characteristic at a high temperature of 60°C or higher, (the effect of preventing) the gas generation amount during a high-temperature cycle test, and the high-temperature storage characteristic of the nonaqueous sodium ion battery can be improved. Further, when the content is 11.5 mass% or less, the film formed on the electrode does not become too thick, and this hardly leads to an increase in resistance.

One type of the fluorosulfates may be used alone, or two or more types thereof may be mixed and used in any combination and any proportion according to the application.

In an aspect, the fluorosulfate content x preferably satisfies 0.008 mass% ≤ x ≤ 11.5 mass%, more preferably satisfies 0.008 mass% ≤ x ≤ 10.5 mass%, further preferably satisfies 0.008 mass% ≤ x ≤ 7.5 mass% and particularly preferably satisfies 1.5 mass% ≤ x ≤ 5.5 mass% with respect to the total amount of the electrolyte solution for a nonaqueous sodium ion battery.

### [(II) At Least One Selected from Group Consisting of Compound Having At Least Two Isocyanate Groups, Compound Represented by Following Formula (1), Compound Represented by Following Formula (2), and Compound Represented by Following Formula (5)]

Hereinafter, the component (II) will be described.

The compound having at least two isocyanate groups (hereinafter, also referred to as compound A) is not particularly limited as long as it is a compound having at least two isocyanate groups.

The number of isocyanate groups in the compound is not particularly limited as long as it is at least 2 but is preferably 6 or less.

The number of isocyanate groups in the compound is preferably 2-6, more preferably 2-4, and further preferably 2-3.

The isocyanate groups may be at the terminal of the compound or does not have to be at the terminal of the compound. In a preferable aspect, a compound having two isocyanate groups at the terminal of the compound is preferable.

The compound A is not particularly limited as long as it is a compound having at least two isocyanate groups, but an example thereof is a compound having 2 to 20 carbon atoms excluding the carbon atoms of the isocyanate groups.

In a preferable aspect, the number of carbon atoms of the compound A is preferably 2 to 12, more preferably 2 to 10, and further preferably 3 to 8.

Specific examples of the compound having at least two isocyanate groups include pentamethylene diisocyanate, hexamethylene diisocyanate, 1,3-diisocyanatobenzene, 1,4-diisocyanatobenzene, 1,3-bis(isocyanatomethyl)benzene, 1,3-bis(isocyanatomethyl)cyclohexane, 1,3,5-tris(6-isocyanatohexyl)-1,3,5-triazinane-2,4,6-trione, and the like.

The compound having at least two isocyanate groups is preferably pentamethylene diisocyanate, 1,3-diisocyanatobenzene, 1,4-diisocyanatobenzene, 1,3-bis(isocyanatomethyl)benzene, 1,3-bis(isocyanatomethyl)cyclohexane, or 1,3,5-tris(6-isocyanatohexyl)-1,3,5-triazinane-2,4,6-trione.

The compound represented by the formula (1), the compound represented by the formula (2), and the compound represented by the formula (5) are shown below.

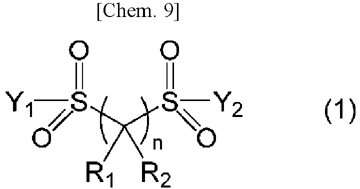

[In the formula (1), n represents an integer of 1-4.

R₁ and R₂ each independently represent a hydrogen atom, a halogen atom, a hydrocarbon group having 1 to 10 carbon atoms (the hydrocarbon group may have at least one selected from the group consisting of a heteroatom and a halogen atom and may have a branched chain or a cyclic structure when the number of carbon atoms is 3 or more), an alkoxy group having 1 to 10 carbon atoms, an alkenyloxy group having 2 to 10 carbon atoms, an alkynyloxy group having 2 to 10 carbon atoms, a cycloalkoxy group having 3 to 10 carbon atoms, a cycloalkenyloxy group having 3 to 10 carbon atoms, or an aryloxy group having 6 to 10 carbon atoms.

Y₁ and Y₂ each independently represent a halogen atom, a hydrocarbon group having 1 to 10 carbon atoms (the hydrocarbon group may have at least one selected from the group consisting of a heteroatom and a halogen atom and may have a branched chain or a cyclic structure when the number of carbon atoms is 3 or more), an alkoxy group having 1 to 10 carbon atoms, an alkenyloxy group having 2 to 10 carbon atoms, an alkynyloxy group having 2 to 10 carbon atoms, a cycloalkoxy group having 3 to 10 carbon atoms, a cycloalkenyloxy group having 3 to 10 carbon atoms, an aryloxy group having 6 to 10 carbon atoms, or -O⁻(M₁^{A+})ₐ, M₁^{A+} represents a proton, a metal cation, or an onium cation, and A represents a valence of the cation. a represents a number satisfying A × a = 1.]

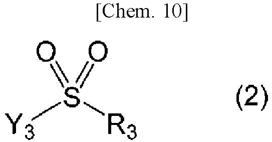

[In the formula (2), R₃ represents a hydrocarbon group having 1 to 10 carbon atoms (the hydrocarbon group may have at least one selected from the group consisting of a heteroatom and a halogen atom and may have a branched chain or a cyclic structure when the number of carbon atoms is 3 or more), an alkoxy group having 1 to 10 carbon atoms (the alkoxy group may have a halogen atom), an alkenyloxy group having 2 to 10 carbon atoms, an alkynyloxy group having 2 to 10 carbon atoms, a cycloalkoxy group having 3 to 10 carbon atoms, a cycloalkenyloxy group having 3 to 10 carbon atoms, an aryloxy group having 6 to 10 carbon atoms, or -O⁻(M₂^{B+})_{b}, M₂^{B+} represents a proton, a metal cation, or an onium cation, and B represents the valence of the cation. b represents a number satisfying B × b = 1.

Y₃ represents a halogen atom, a hydrocarbon group having 1 to 10 carbon atoms (the hydrocarbon group may have at least one selected from the group consisting of a heteroatom and a halogen atom and may have a branched chain or a cyclic structure when the number of carbon atoms is 3 or more), an alkoxy group having 1 to 10 carbon atoms (the alkoxy group may have a halogen atom), an alkenyloxy group having 2 to 10 carbon atoms, an alkynyloxy group having 2 to 10 carbon atoms, a cycloalkoxy group having 3 to 10 carbon atoms, a cycloalkenyloxy group having 3 to 10 carbon atoms, an aryloxy group having 6 to 10 carbon atoms, or -O⁻(M₃^{E+})ₑ, M₃^{E+} represents a proton, a metal cation, or an onium cation, and E represents the valence of the cation. e represents a number satisfying E × e = 1.]

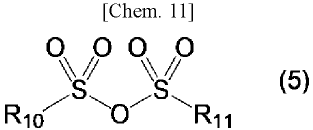

[In the formula (5), R₁₀ and R₁₁ each independently represent a hydrogen atom, a halogen atom, a hydrocarbon group having 1 to 10 carbon atoms (the hydrocarbon group may have a heteroatom or a halogen atom and may have a branched chain or a cyclic structure when the number of carbon atoms is 3 or more), an alkoxy group having 1 to 10 carbon atoms (the alkoxy group may have a halogen atom), an alkenyloxy group having 2 to 10 carbon atoms, an alkynyloxy group having 2 to 10 carbon atoms, a cycloalkoxy group having 3 to 10 carbon atoms, a cycloalkenyloxy group having 3 to 10 carbon atoms, an aryloxy group having 6 to 10 carbon atoms, or -O⁻(M₅^{G+})_{g}, M₅^{G+} represents a proton, a metal cation, or an onium cation, and G represents a valence of the cation. g represents a number satisfying G × g = 1. R₁₀ and R₁₁ may be bonded to each other to form a cyclic structure.]

In the present specification, a hydrocarbon group refers to a group having a CH structure in which a carbon atom and a hydrogen atom are bonded.

In the formula (1), n represents an integer of 1-4.

R₁ and R₂ each independently represent a hydrogen atom, a halogen atom, a hydrocarbon group having 1 to 10 carbon atoms (the hydrocarbon group may have at least one selected from the group consisting of a heteroatom and a halogen atom and may have a branched chain or a cyclic structure when the number of carbon atoms is 3 or more), an alkoxy group having 1 to 10 carbon atoms, an alkenyloxy group having 2 to 10 carbon atoms, an alkynyloxy group having 2 to 10 carbon atoms, a cycloalkoxy group having 3 to 10 carbon atoms, a cycloalkenyloxy group having 3 to 10 carbon atoms, or an aryloxy group having 6 to 10 carbon atoms.

When R₁ and R₂ represent a halogen atom, examples of the halogen atom include a fluorine atom, a chlorine atom, a bromine atom, an iodine atom, and the like.

When R₁ and R₂ represent a hydrocarbon group having 1 to 10 carbon atoms, the hydrocarbon group is not particularly limited, but examples thereof include an alkyl group having 1 to 10 carbon atoms, an alkenyl group having 2 to 10 carbon atoms, an alkynyl group having 2 to 10 carbon atoms, a cycloalkyl group having 3 to 10 carbon atoms, a cycloalkenyl group having 3 to 10 carbon atoms, an aryl group having 6 to 10 carbon atoms, and a group having 1 to 10 carbon atoms in which these groups are combined.

When R₁ and R₂ are an alkyl group having 1 to 10 carbon atoms, examples of the alkyl group include a methyl group, an ethyl group, an n-propyl group, an isopropyl group, an n-butyl group, a sec-butyl group, an isobutyl group, a tert-butyl group, an n-pentyl group, an n-hexyl group, an n-octyl group, an n-decyl group, and the like.

When R₁ and R₂ are an alkenyl group having 2 to 10 carbon atoms, examples of the alkenyl group include a vinyl group, an allyl group, a 1-propenyl group, an isopropenyl group, a 2-butenyl group, a 1,3-butadienyl group, and the like.

When R₁ and R₂ are an alkynyl group having 2 to 10 carbon atoms, examples of the alkynyl group include an ethynyl group, a 1-propynyl group, a 2-propynyl group, a 1,1-dimethyl-2-propynyl group, and the like.

When R₁ and R₂ are a cycloalkyl group having 3 to 10 carbon atoms, examples of the cycloalkyl group include a cyclopentyl group, a cyclohexyl group, and the like.

When R₁ and R₂ are a cycloalkenyl group having 3 to 10 carbon atoms, examples of the cycloalkenyl group include a cyclopentenyl group, a cyclohexenyl group, and the like.

When R₁ and R₂ are an aryl group having 6 to 10 carbon atoms, examples of the aryl group include a phenyl group, a naphthyl group, and the like.

The above hydrocarbon group may have a heteroatom. Examples of the heteroatom include an oxygen atom, a sulfur atom, a nitrogen atom, and the like.

Any hydrogen atom of the above hydrocarbon group may be substituted with a halogen atom. Examples of the halogen atom include a fluorine atom, a chlorine atom, a bromine atom, an iodine atom, and the like, and a fluorine atom is preferable.

The hydrocarbon group having a halogen atom and having 1 to 10 carbon atoms is not particularly limited, but examples thereof include a trifluoromethyl group and the like when the number of carbon atoms is 1.

The number of carbon atoms of the hydrocarbon group having 1 to 10 carbon atoms represents the numbers of carbon atoms as R₁ and R₂.

When R₁ and R₂ represent an alkoxy group having 1 to 10 carbon atoms, the alkoxy group having 1 to 10 carbon atoms is not particularly limited but may be linear or branched.

The linear alkoxy group is preferably an alkoxy group having 1 to 6 carbon atoms. An alkoxy group having 1 to 3 carbon atoms is more preferable.

As the branched alkoxy group, an alkoxy group having 3 to 10 carbon atoms is preferable, and an alkoxy group having 3 to 6 carbon atoms is more preferable.

When R₁ and R₂ represent an alkenyloxy group having 2 to 10 carbon atoms, the alkenyloxy group having 2 to 10 carbon atoms is not particularly limited but may be linear or branched. An alkenyloxy group having 2 to 6 carbon atoms is preferable, and an alkenyloxy group having 2 to 3 carbon atoms is more preferable.

When R₁ and R₂ represent an alkynyloxy group having 2 to 10 carbon atoms, the alkynyloxy group having 2 to 10 carbon atoms is not particularly limited but may be linear or branched. An alkynyloxy group having 2 to 6 carbon atoms is preferable, and an alkynyloxy group having 2 to 3 carbon atoms is more preferable.

When R₁ and R₂ represent a cycloalkoxy group having 3 to 10 carbon atoms, the cycloalkoxy group having 3 to 10 carbon atoms is not particularly limited but may be monocyclic or polycyclic. A cycloalkoxy group having 3 to 8 carbon atoms is preferable, and a cycloalkoxy group having 3 to 6 carbon atoms is more preferable.

When R₁ and R₂ represent a cycloalkenyloxy group having 3 to 10 carbon atoms, the cycloalkenyloxy group having 3 to 10 carbon atoms is not particularly limited but may be monocyclic or polycyclic. A cycloalkenyloxy group having 3 to 8 carbon atoms is preferable, and a cycloalkenyloxy group having 3 to 6 carbon atoms is more preferable.

When R₁ and R₂ represent an aryloxy group having 6 to 10 carbon atoms, the aryloxy group having 6 to 10 carbon atoms is not particularly limited but may be monocyclic or polycyclic, and examples thereof include a phenyloxy group, a naphthyloxy group, and the like.

When n represents an integer of 2-4, the plurality of R₁'s may be the same or different.

When n represents an integer of 2-4, the plurality of R₂'s may be the same or different.

In a preferable aspect, R₁ preferably represents a hydrogen atom, a fluorine atom, or a hydrocarbon group having 1 to 10 carbon atoms.

In a preferable aspect, R₂ preferably represents a hydrogen atom, a fluorine atom, or a hydrocarbon group having 1 to 10 carbon atoms.

Y₁ and Y₂ each independently represent a halogen atom, a hydrocarbon group having 1 to 10 carbon atoms (the hydrocarbon group may have at least one selected from the group consisting of a heteroatom and a halogen atom and may have a branched chain or a cyclic structure when the number of carbon atoms is 3 or more), an alkoxy group having 1 to 10 carbon atoms, an alkenyloxy group having 2 to 10 carbon atoms, an alkynyloxy group having 2 to 10 carbon atoms, a cycloalkoxy group having 3 to 10 carbon atoms, a cycloalkenyloxy group having 3 to 10 carbon atoms, an aryloxy group having 6 to 10 carbon atoms, or -O⁻(M₁^{A+})ₐ, M₁^{A+} represents a proton, a metal cation, or an onium cation, and A represents a valence of the cation. a represents a number satisfying A × a = 1.

When Y₁ and Y₂ represent a halogen atom, examples of the halogen atom include a fluorine atom, a chlorine atom, a bromine atom, an iodine atom, and the like.

When Y₁ and Y₂ represent a hydrocarbon group having 1 to 10 carbon atoms, the hydrocarbon group is not particularly limited, but examples thereof include an alkyl group having 1 to 10 carbon atoms, an alkenyl group having 2-10 carbon atoms, an alkynyl group having 2 to 10 carbon atoms, a cycloalkyl group having 3 to 10 carbon atoms, a cycloalkenyl group having 3 to 10 carbon atoms, an aryl group having 6 to 10 carbon atoms, and a group having 1 to 10 carbon atoms in which these groups are combined.

When Y₁ and Y₂ are an alkyl group having 1 to 10 carbon atoms, examples of the alkyl group include a methyl group, an ethyl group, an n-propyl group, an isopropyl group, an n-butyl group, a sec-butyl group, an isobutyl group, a tert-butyl group, an n-pentyl group, an n-hexyl group, an n-octyl group, an n-decyl group, and the like.

When Y₁ and Y₂ are an alkenyl group having 2 to 10 carbon atoms, examples of the alkenyl group include a vinyl group, an allyl group, a 1-propenyl group, an isopropenyl group, a 2-butenyl group, a 1,3-butadienyl group, and the like.

When Y₁ and Y₂ are an alkynyl group having 2 to 10 carbon atoms, examples of the alkynyl group include an ethynyl group, a 1-propynyl group, a 2-propynyl group, a 1,1-dimethyl-2-propynyl group, and the like.

When Y₁ and Y₂ are a cycloalkyl group having 3 to 10 carbon atoms, examples of the cycloalkyl group include a cyclopentyl group, a cyclohexyl group, and the like.

When Y₁ and Y₂ are a cycloalkenyl group having 3 to 10 carbon atoms, examples of the cycloalkenyl group include a cyclopentenyl group, a cyclohexenyl group, and the like.

When Y₁ and Y₂ are an aryl group having 6 to 10 carbon atoms, examples of the aryl group include a phenyl group, a naphthyl group, and the like.

The above hydrocarbon group may have a heteroatom. Examples of the heteroatom include an oxygen atom, a sulfur atom, a nitrogen atom, and the like.

Any hydrogen atom of the above hydrocarbon group may be substituted with a halogen atom. Examples of the halogen atom include a fluorine atom, a chlorine atom, a bromine atom, an iodine atom, and the like, and a fluorine atom is preferable.

The hydrocarbon group having a halogen atom and having 1-10 carbon atoms is not particularly limited, but examples thereof include a trifluoromethyl group and the like when the number of carbon atoms is 1.

The number of carbon atoms of the hydrocarbon group having 1-10 carbon atoms represents the numbers of carbon atoms as Y₁ and Y₂.

When Y₁ and Y₂ represent an alkoxy group having 1 to 10 carbon atoms, the alkoxy group having 1 to 10 carbon atoms is not particularly limited but may be linear or branched.

The linear alkoxy group is preferably an alkoxy group having 1 to 6 carbon atoms. An alkoxy group having 1 to 3 carbon atoms is more preferable.

As the branched alkoxy group, an alkoxy group having 3 to 10 carbon atoms is preferable, and an alkoxy group having 3 to 6 carbon atoms is more preferable.

When Y₁ and Y₂ represent an alkenyloxy group having 2 to 10 carbon atoms, the alkenyloxy group having 2 to 10 carbon atoms is not particularly limited but may be linear or branched. An alkenyloxy group having 2 to 6 carbon atoms is preferable, and an alkenyloxy group having 2 to 3 carbon atoms is more preferable.

When Y₁ and Y₂ represent an alkynyloxy group having 2 to 10 carbon atoms, the alkynyloxy group having 2 to 10 carbon atoms is not particularly limited but may be linear or branched. An alkynyloxy group having 2 to 6 carbon atoms is preferable, and an alkynyloxy group having 2 to 3 carbon atoms is more preferable.

When Y₁ and Y₂ represent a cycloalkoxy group having 3 to 10 carbon atoms, the cycloalkoxy group having 3 to 10 carbon atoms is not particularly limited but may be monocyclic or polycyclic. A cycloalkoxy group having 3 to 8 carbon atoms is preferable, and a cycloalkoxy group having 3 to 6 carbon atoms is more preferable.

When Y₁ and Y₂ represent a cycloalkenyloxy group having 3 to 10 carbon atoms, the cycloalkenyloxy group having 3 to 10 carbon atoms is not particularly limited but may be monocyclic or polycyclic. A cycloalkenyloxy group having 3 to 8 carbon atoms is preferable, and a cycloalkenyloxy group having 3 to 6 carbon atoms is more preferable.

When Y₁ and Y₂ represent an aryloxy group having 6 to 10 carbon atoms, the aryloxy group having 6 to 10 carbon atoms is not particularly limited but may be monocyclic or polycyclic, and examples thereof include a phenyloxy group, a naphthyloxy group, and the like.

M₁^{A+} represents a proton, a metal cation, or an onium cation, and A represents a valence of the cation.

When M₁^{A+} represents a metal cation, examples of the metal cation include an alkali metal cation such as a lithium ion, a sodium ion, and a potassium ion and an alkaline earth metal cation such as a magnesium ion and a calcium ion.

When M₁^{A+} represents an onium cation, examples of the onium cation include a trialkylammonium ion, a tetraalkylammonium ion, a tetraalkylphosphonium ion, an imidazolium ion, an ammonium ion having a spiro skeleton, and the like.

A represents a valence of the cation. When M₁^{A+} represents a monovalent cation, A is 1, and when M₁^{A+} represents a divalent cation, A is 2.

M₁^{A+} preferably represents a metal cation, more preferably a lithium ion or a sodium ion, and particularly preferably a sodium ion.

In a preferable aspect, Y₁ preferably represents a fluorine atom, a hydrocarbon group having 1 to 10 carbon atoms, an alkoxy group having 1 to 10 carbon atoms, or -O⁻(M₁^{A+})ₐ.

In a preferable aspect, Y₂ preferably represents a fluorine atom, a hydrocarbon group having 1 to 10 carbon atoms, an alkoxy group having 1 to 10 carbon atoms, or -O⁻(M₁^{A+})ₐ.

Specific examples of the compound represented by the formula (1) are shown below, but the present disclosure is not limited thereto.

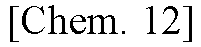

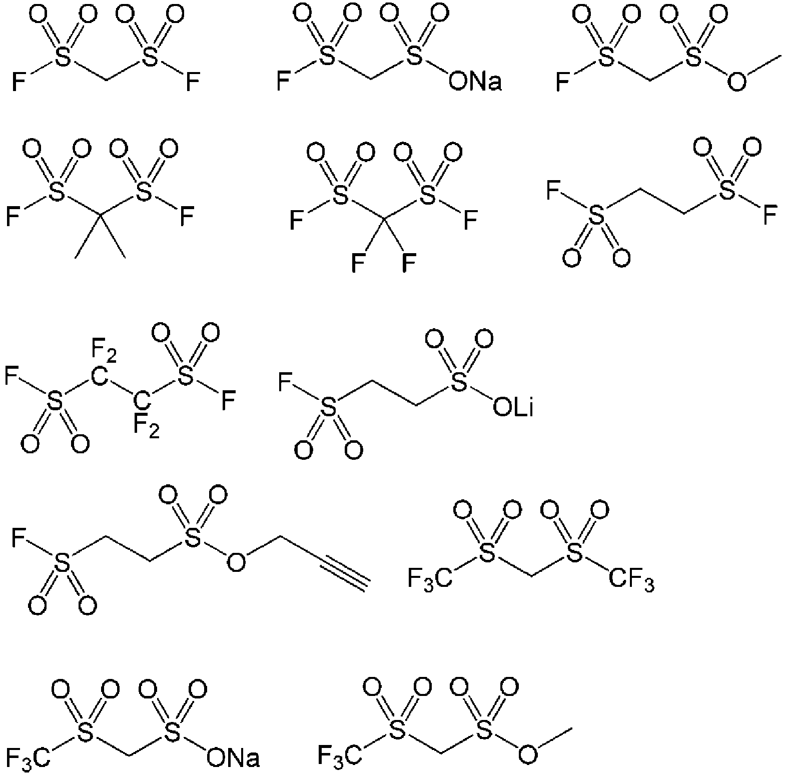

In the formula (2), R₃ represents a hydrocarbon group having 1 to 10 carbon atoms (the hydrocarbon group may have at least one selected from the group consisting of a heteroatom and a halogen atom and may have a branched chain or a cyclic structure when the number of carbon atoms is 3 or more), an alkoxy group having 1 to 10 carbon atoms (the alkoxy group may have a halogen atom), an alkenyloxy group having 2 to 10 carbon atoms, an alkynyloxy group having 2 to 10 carbon atoms, a cycloalkoxy group having 3 to 10 carbon atoms, a cycloalkenyloxy group having 3 to 10 carbon atoms, an aryloxy group having 6 to 10 carbon atoms, or -O⁻(M₂^{B+})_{b}, M₂^{B+} represents a proton, a metal cation, or an onium cation, and B represents a valence of the cation. b represents a number satisfying B × b = 1.

When R₃ represents a hydrocarbon group having 1 to 10 carbon atoms, the hydrocarbon group is not particularly limited, but examples thereof include an alkyl group having 1 to 10 carbon atoms, an alkenyl group having 2 to 10 carbon atoms, an alkynyl group having 2 to 10 carbon atoms, a cycloalkyl group having 3 to 10 carbon atoms, a cycloalkenyl group having 3 to 10 carbon atoms, an aryl group having 6 to 10 carbon atoms, and a group having 1 to 10 carbon atoms in which these groups are combined.

When R₃ is an alkyl group having 1 to 10 carbon atoms, examples of the alkyl group include a methyl group, an ethyl group, an n-propyl group, an isopropyl group, an n-butyl group, a sec-butyl group, an isobutyl group, a tert-butyl group, an n-pentyl group, an n-hexyl group, an n-octyl group, an n-decyl group, and the like.

When R₃ is an alkenyl group having 2 to 10 carbon atoms, examples of the alkenyl group include a vinyl group, an allyl group, a 1-propenyl group, an isopropenyl group, a 2-butenyl group, a 1,3-butadienyl group, and the like.

When R₃ is an alkynyl group having 2 to 10 carbon atoms, examples of the alkynyl group include an ethynyl group, a 1-propynyl group, a 2-propynyl group, a 1,1-dimethyl-2-propynyl group, and the like.

When R₃ is a cycloalkyl group having 3 to 10 carbon atoms, examples of the cycloalkyl group include a cyclopentyl group, a cyclohexyl group, and the like.

When R₃ is a cycloalkenyl group having 3 to 10 carbon atoms, examples of the cycloalkenyl group include a cyclopentenyl group, a cyclohexenyl group, and the like.

When R₃ is an aryl group having 6 to 10 carbon atoms, examples of the aryl group include a phenyl group, a naphthyl group, and the like.

The above hydrocarbon group may have a heteroatom. Examples of the heteroatom include an oxygen atom, a sulfur atom, a nitrogen atom, and the like.

Any hydrogen atom of the above hydrocarbon group may be substituted with a halogen atom. Examples of the halogen atom include a fluorine atom, a chlorine atom, a bromine atom, an iodine atom, and the like, and a fluorine atom is preferable.

The hydrocarbon group having a halogen atom and having 1 to 10 carbon atoms is not particularly limited, but examples thereof include a trifluoromethyl group and the like when the number of carbon atoms is 1.

The number of carbon atoms of the hydrocarbon group having 1 to 10 carbon atoms represents the number of carbon atoms as R₃.

The hydrocarbon group having 1 to 10 carbon atoms as R₃ may be a methyl group or does not have to be a methyl group. The phrase that the hydrocarbon group having 1 to 10 carbon atoms as R₃ is not a methyl group means that the "methyl group" itself is excluded from the hydrocarbon group having 1 to 10 carbon atoms as R₃.

When R₃ represents an alkoxy group having 1 to 10 carbon atoms, the alkoxy group having 1 to 10 carbon atoms is not particularly limited but may be linear or branched.

The linear alkoxy group is preferably an alkoxy group having 1 to 6 carbon atoms. An alkoxy group having 1 to 3 carbon atoms is more preferable.

As the branched alkoxy group, an alkoxy group having 3 to 10 carbon atoms is preferable, and an alkoxy group having 3 to 6 carbon atoms is more preferable.

The alkoxy group having 1 to 10 carbon atoms may have a halogen atom. Examples of the halogen atom include a fluorine atom, a chlorine atom, a bromine atom, an iodine atom, and the like, and a fluorine atom is preferable.

When R₃ represents an alkenyloxy group having 2 to 10 carbon atoms, the alkenyloxy group having 2 to 10 carbon atoms is not particularly limited but may be linear or branched. An alkenyloxy group having 2 to 6 carbon atoms is preferable, and an alkenyloxy group having 2 to 3 carbon atoms is more preferable.

When R₃ represents an alkynyloxy group having 2 to 10 carbon atoms, the alkynyloxy group having 2 to 10 carbon atoms is not particularly limited but may be linear or branched. An alkynyloxy group having 2 to 6 carbon atoms is preferable, and an alkynyloxy group having 2 to 3 carbon atoms is more preferable.

When R₃ represents a cycloalkoxy group having 3 to 10 carbon atoms, the cycloalkoxy group having 3 to 10 carbon atoms is not particularly limited but may be monocyclic or polycyclic. A cycloalkoxy group having 3 to 8 carbon atoms is preferable, and a cycloalkoxy group having 3 to 6 carbon atoms is more preferable.

When R₃ represents a cycloalkenyloxy group having 3 to 10 carbon atoms, the cycloalkenyloxy group having 3 to 10 carbon atoms is not particularly limited but may be monocyclic or polycyclic. A cycloalkenyloxy group having 3 to 8 carbon atoms is preferable, and a cycloalkenyloxy group having 3 to 6 carbon atoms is more preferable.

When R₃ represents an aryloxy group having 6 to 10 carbon atoms, the aryloxy group having 6 to 10 carbon atoms is not particularly limited but may be monocyclic or polycyclic, and examples thereof include a phenyloxy group, a naphthyloxy group, and the like.

M₂^{B+} represents a proton, a metal cation, or an onium cation, and B represents a valence of the cation.

When M₂^{B+} represents a metal cation, examples of the metal cation include an alkali metal cation such as a lithium ion, a sodium ion, and a potassium ion and an alkaline earth metal cation such as a magnesium ion and a calcium ion.

When M₂^{B+} represents an onium cation, examples of the onium cation include a trialkylammonium ion, a tetraalkylammonium ion, a tetraalkylphosphonium ion, an imidazolium ion, an ammonium ion having a spiro skeleton, and the like.

B represents a valence of the cation. When M₂^{B+} represents a monovalent cation, B is 1, and when M₂^{B+} represents a divalent cation, B is 2.

M₂^{B+} preferably represents a metal cation, more preferably a lithium ion or a sodium ion, and particularly preferably a sodium ion.

In a preferable aspect, R₃ preferably represents a hydrocarbon group having 1 to 10 carbon atoms excluding a methyl group, an alkoxy group having 1 to 10 carbon atoms, or -O⁻(M₂^{B+})_{b}.

Y₃ represents a halogen atom, a hydrocarbon group having 1 to 10 carbon atoms (the hydrocarbon group may have at least one selected from the group consisting of a heteroatom and a halogen atom and may have a branched chain or a cyclic structure when the number of carbon atoms is 3 or more), an alkoxy group having 1 to 10 carbon atoms (the alkoxy group may have a halogen atom), an alkenyloxy group having 2 to 10 carbon atoms, an alkynyloxy group having 2 to 10 carbon atoms, a cycloalkoxy group having 3 to 10 carbon atoms, a cycloalkenyloxy group having 3 to 10 carbon atoms, an aryloxy group having 6-10 carbon atoms, or -O⁻(M₃^{E+})ₑ, M₃^{E+} represents a proton, a metal cation, or an onium cation, and E represents a valence of the cation. e represents a number satisfying E × e = 1.

When Y₃ represents a halogen atom, examples of the halogen atom include a fluorine atom, a chlorine atom, a bromine atom, an iodine atom, and the like.

When Y₃ represents a hydrocarbon group having 1 to 10 carbon atoms, the hydrocarbon group is not particularly limited, but examples thereof include an alkyl group having 1 to 10 carbon atoms, an alkenyl group having 2 to 10 carbon atoms, an alkynyl group having 2 to 10 carbon atoms, a cycloalkyl group having 3 to 10 carbon atoms, a cycloalkenyl group having 3 to 10 carbon atoms, an aryl group having 6 to 10 carbon atoms, and a group having 1 to 10 carbon atoms in which these groups are combined.

When Y₃ is an alkyl group having 1 to 10 carbon atoms, examples of the alkyl group include a methyl group, an ethyl group, an n-propyl group, an isopropyl group, an n-butyl group, a sec-butyl group, an isobutyl group, a tert-butyl group, an n-pentyl group, an n-hexyl group, an n-octyl group, an n-decyl group, and the like.

When Y₃ is an alkenyl group having 2 to 10 carbon atoms, examples of the alkenyl group include a vinyl group, an allyl group, a 1-propenyl group, an isopropenyl group, a 2-butenyl group, a 1,3-butadienyl group, and the like.

When Y₃ is an alkynyl group having 2 to 10 carbon atoms, examples of the alkynyl group include an ethynyl group, a 1-propynyl group, a 2-propynyl group, a 1,1-dimethyl-2-propynyl group, and the like.

When Y₃ is a cycloalkyl group having 3 to 10 carbon atoms, examples of the cycloalkyl group include a cyclopentyl group, a cyclohexyl group, and the like.

When Y₃ is a cycloalkenyl group having 3 to 10 carbon atoms, examples of the cycloalkenyl group include a cyclopentenyl group, a cyclohexenyl group, and the like.

When Y₃ is an aryl group having 6 to 10 carbon atoms, examples of the aryl group include a phenyl group, a naphthyl group, and the like.

The above hydrocarbon group may have a heteroatom. Examples of the heteroatom include an oxygen atom, a sulfur atom, a nitrogen atom, and the like.

Any hydrogen atom of the above hydrocarbon group may be substituted with a halogen atom. Examples of the halogen atom include a fluorine atom, a chlorine atom, a bromine atom, an iodine atom, and the like, and a fluorine atom is preferable.

The hydrocarbon group having a halogen atom and having 1 to 10 carbon atoms is not particularly limited, but examples thereof include a trifluoromethyl group and the like when the number of carbon atoms is 1.

The number of carbon atoms of the hydrocarbon group having 1 to 10 carbon atoms represents the number of carbon atoms as Y₃.

When Y₃ represents an alkoxy group having 1 to 10 carbon atoms, the alkoxy group having 1 to 10 carbon atoms is not particularly limited but may be linear or branched.

The linear alkoxy group is preferably an alkoxy group having 1 to 6 carbon atoms. An alkoxy group having 1 to 3 carbon atoms is more preferable.

As the branched alkoxy group, an alkoxy group having 3 to 10 carbon atoms is preferable, and an alkoxy group having 3 to 6 carbon atoms is more preferable.

The alkoxy group having 1 to 10 carbon atoms may have a halogen atom. Examples of the halogen atom include a fluorine atom, a chlorine atom, a bromine atom, an iodine atom, and the like, and a fluorine atom is preferable.

When Y₃ represents an alkenyloxy group having 2 to 10 carbon atoms, the alkenyloxy group having 2 to 10 carbon atoms is not particularly limited but may be linear or branched. An alkenyloxy group having 2 to 6 carbon atoms is preferable, and an alkenyloxy group having 2 to 3 carbon atoms is more preferable.

When Y₃ represents an alkynyloxy group having 2 to 10 carbon atoms, the alkynyloxy group having 2 to 10 carbon atoms is not particularly limited but may be linear or branched. An alkynyloxy group having 2 to 6 carbon atoms is preferable, and an alkynyloxy group having 2 to 3 carbon atoms is more preferable.

When Y₃ represents a cycloalkoxy group having 3 to 10 carbon atoms, the cycloalkoxy group having 3 to 10 carbon atoms is not particularly limited but may be monocyclic or polycyclic. A cycloalkoxy group having 3 to 8 carbon atoms is preferable, and a cycloalkoxy group having 3 to 6 carbon atoms is more preferable.

When Y₃ represents a cycloalkenyloxy group having 3 to 10 carbon atoms, the cycloalkenyloxy group having 3 to 10 carbon atoms is not particularly limited but may be monocyclic or polycyclic. A cycloalkenyloxy group having 3 to 8 carbon atoms is preferable, and a cycloalkenyloxy group having 3 to 6 carbon atoms is more preferable.

When Y₃ represents an aryloxy group having 6 to 10 carbon atoms, the aryloxy group having 6 to 10 carbon atoms is not particularly limited but may be monocyclic or polycyclic, and examples thereof include a phenyloxy group, a naphthyloxy group, and the like.

M₃^{E+} represents a proton, a metal cation, or an onium cation, and E represents a valence of the cation.

When M₃^{E+} represents a metal cation, examples of the metal cation include an alkali metal cation such as a lithium ion, a sodium ion, and a potassium ion and an alkaline earth metal cation such as a magnesium ion and a calcium ion.

When M₃^{E+} represents an onium cation, examples of the onium cation include a trialkylammonium ion, a tetraalkylammonium ion, a tetraalkylphosphonium ion, an imidazolium ion, an ammonium ion having a spiro skeleton, and the like.

E represents a valence of the cation. When M₃^{E+} represents a monovalent cation, E is 1, and when M₃^{E+} represents a divalent cation, E is 2.

M₃^{E+} preferably represents a metal cation, more preferably a lithium ion or a sodium ion, and particularly preferably a sodium ion.

In a preferable aspect, Y₃ preferably represents a fluorine atom, a hydrocarbon group having 1 to 10 carbon atoms excluding a methyl group, an alkoxy group having 1 to 10 carbon atoms, or -O⁻(M₃^{E+})ₑ.

Specific examples of the compound represented by the formula (2) are shown below, but the present disclosure is not limited thereto.

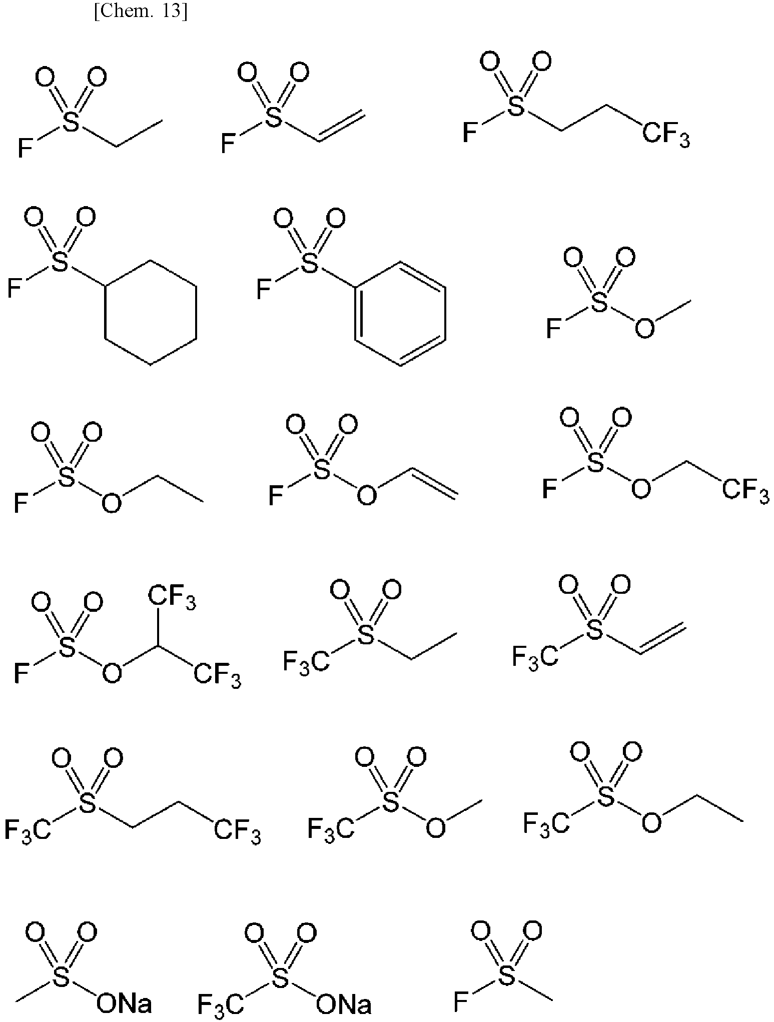

In the formula (5), R₁₀ and R₁₁ each independently represent a hydrogen atom, a halogen atom, a hydrocarbon group having 1 to 10 carbon atoms (the hydrocarbon group may have a heteroatom or a halogen atom and may have a branched chain or a cyclic structure when the number of carbon atoms is 3 or more), an alkoxy group having 1 to 10 carbon atoms (the alkoxy group may have a halogen atom), an alkenyloxy group having 2 to 10 carbon atoms, an alkynyloxy group having 2 to 10 carbon atoms, a cycloalkoxy group having 3 to 10 carbon atoms, a cycloalkenyloxy group having 3 to 10 carbon atoms, an aryloxy group having 6 to 10 carbon atoms, or -O⁻(M₅^{G+})_{g}, M₅^{G+} represents a proton, a metal cation, or an onium cation, and G represents a valence of the cation. g represents a number satisfying G × g = 1. R₁₀ and R₁₁ may be bonded to each other to form a cyclic structure

When R₁₀ and R₁₁ represent a halogen atom, examples of the halogen atom include a fluorine atom, a chlorine atom, a bromine atom, an iodine atom, and the like.

When R₁₀ and R₁₁ represent a hydrocarbon group having 1 to 10 carbon atoms, the hydrocarbon group is not particularly limited, but examples thereof include an alkyl group having 1 to 10 carbon atoms, an alkenyl group having 2 to 10 carbon atoms, an alkynyl group having 2 to 10 carbon atoms, a cycloalkyl group having 3 to 10 carbon atoms, a cycloalkenyl group having 3 to 10 carbon atoms, an aryl group having 6 to 10 carbon atoms, and a group having 1 to 10 carbon atoms in which these groups are combined.

When R₁₀ and R₁₁ are an alkyl group having 1 to 10 carbon atoms, examples of the alkyl group include a methyl group, an ethyl group, an n-propyl group, an isopropyl group, an n-butyl group, a sec-butyl group, an isobutyl group, a tert-butyl group, an n-pentyl group, an n-hexyl group, an n-octyl group, an n-decyl group, and the like.

When R₁₀ and R₁₁ are an alkenyl group having 2 to 10 carbon atoms, examples of the alkenyl group include a vinyl group, an allyl group, a 1-propenyl group, an isopropenyl group, a 2-butenyl group, a 1,3-butadienyl group, and the like.

When R₁₀ and R₁₁ are an alkynyl group having 2 to 10 carbon atoms, examples of the alkynyl group include an ethynyl group, a 1-propynyl group, a 2-propynyl group, a 1,1-dimethyl-2-propynyl group, and the like.

When R₁₀ and R₁₁ are a cycloalkyl group having 3 to 10 carbon atoms, examples of the cycloalkyl group include a cyclopentyl group, a cyclohexyl group, and the like.

When R₁₀ and R₁₁ are a cycloalkenyl group having 3 to 10 carbon atoms, examples of the cycloalkenyl group include a cyclopentenyl group, a cyclohexenyl group, and the like.

When R₁₀ and R₁₁ are an aryl group having 6 to 10 carbon atoms, examples of the aryl group include a phenyl group, a naphthyl group, and the like.

The above hydrocarbon group may have a heteroatom. Examples of the heteroatom include an oxygen atom, a sulfur atom, a nitrogen atom, a phosphorus atom, a boron atom, and the like.

Any hydrogen atom of the above hydrocarbon group may be substituted with a halogen atom. Examples of the halogen atom include a fluorine atom, a chlorine atom, a bromine atom, an iodine atom, and the like, and a fluorine atom is preferable.

The hydrocarbon group having a halogen atom and having 1 to 10 carbon atoms is not particularly limited, but examples thereof include a trifluoromethyl group and the like when the number of carbon atoms is 1.

The number of carbon atoms of the hydrocarbon group having 1 to 10 carbon atoms represents the numbers of carbon atoms as R₁₀ and R₁₁.

When R₁₀ and R₁₁ represent an alkoxy group having 1 to 10 carbon atoms, the alkoxy group having 1-10 carbon atoms is not particularly limited but may be linear or branched.

The linear alkoxy group is preferably an alkoxy group having 1 to 6 carbon atoms. An alkoxy group having 1 to 3 carbon atoms is more preferable.

As the branched alkoxy group, an alkoxy group having 3 to 10 carbon atoms is preferable, and an alkoxy group having 3 to 6 carbon atoms is more preferable.

The alkoxy group having 1 to 10 carbon atoms may have a halogen atom. Examples of the halogen atom include a fluorine atom, a chlorine atom, a bromine atom, an iodine atom, and the like, and a fluorine atom is preferable.

When R₁₀ and R₁₁ represent an alkenyloxy group having 2 to 10 carbon atoms, the alkenyloxy group having 2 to 10 carbon atoms is not particularly limited but may be linear or branched. An alkenyloxy group having 2 to 6 carbon atoms is preferable, and an alkenyloxy group having 2 to 3 carbon atoms is more preferable.

When R₁₀ and R₁₁ represent an alkynyloxy group having 2 to 10 carbon atoms, the alkynyloxy group having 2 to 10 carbon atoms is not particularly limited but may be linear or branched. An alkynyloxy group having 2 to 6 carbon atoms is preferable, and an alkynyloxy group having 2 to 3 carbon atoms is more preferable.

When R₁₀ and R₁₁ represent a cycloalkoxy group having 3 to 10 carbon atoms, the cycloalkoxy group having 3 to 10 carbon atoms is not particularly limited but may be monocyclic or polycyclic. A cycloalkoxy group having 3 to 8 carbon atoms is preferable, and a cycloalkoxy group having 3 to 6 carbon atoms is more preferable.

When R₁₀ and R₁₁ represent a cycloalkenyloxy group having 3 to 10 carbon atoms, the cycloalkenyloxy group having 3 to 10 carbon atoms is not particularly limited but may be monocyclic or polycyclic. A cycloalkenyloxy group having 3 to 8 carbon atoms is preferable, and a cycloalkenyloxy group having 3 to 6 carbon atoms is more preferable.

When R₁₀ and R₁₁ represent an aryloxy group having 6 to 10 carbon atoms, the aryloxy group having 6 to 10 carbon atoms is not particularly limited but may be monocyclic or polycyclic, and examples thereof include a phenyloxy group, a naphthyloxy group, and the like.

M₅^{G+} represents a proton, a metal cation, or an onium cation, and G represents a valence of the cation.

When M₅^{G+} represents a metal cation, examples of the metal cation include an alkali metal cation such as a lithium ion, a sodium ion, and a potassium ion and an alkaline earth metal cation such as a magnesium ion and a calcium ion.

When M₅^{G+} represents an onium cation, examples of the onium cation include a trialkylammonium ion, a tetraalkylammonium ion, a tetraalkylphosphonium ion, an imidazolium ion, an ammonium ion having a spiro skeleton, and the like.

G represents a valence of the cation. When M₅^{G+} represents a monovalent cation, G is 1, and when M₅^{G+} represents a divalent cation, G is 2.

M₅^{G+} preferably represents a metal cation, more preferably a lithium ion or a sodium ion, and particularly preferably a sodium ion.

In a preferable aspect, R₁₀ and R₁₁ preferably represent a fluorine atom, a hydrocarbon group having 1 to 10 carbon atoms, or an alkoxy group having 1 to 10 carbon atoms.

In another preferable aspect, R₁₀ and R₁₁ are preferably bonded to each other to form a cyclic structure. In particular, a 5-membered or 6-membered cyclic structure is preferably formed together with -S-O-S- in the formula (5).

Specific examples of the compound represented by the formula (5) are shown below, but the present disclosure is not limited thereto.

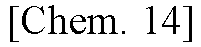

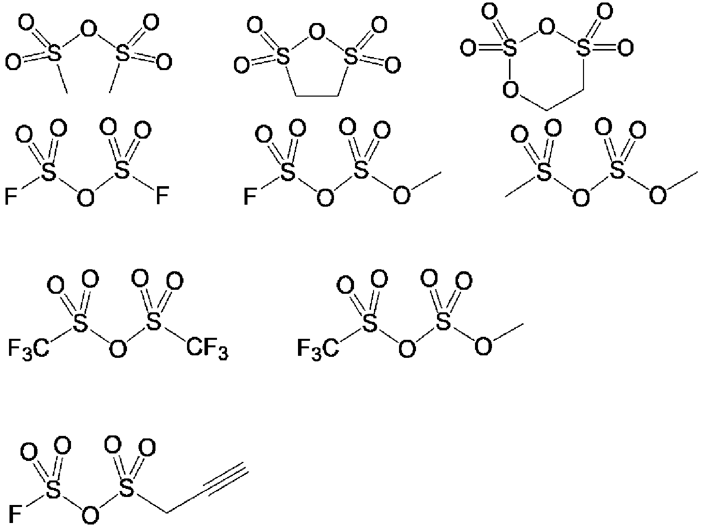

The compound having at least two isocyanate groups is preferably at least one selected from the group consisting of pentamethylene diisocyanate and hexamethylene diisocyanate.

The compound represented by the formula (1) is preferably at least one selected from the group consisting of CH₂(SO₂F)₂, CH₂(SO₂F)(SO₂ONa), CH₂(SO₂F)(SO₂OCH₃), C(CH₃)₂(SO₂F)₂, C(F)₂(SO₂F)₂, CH₂CH₂(SO₂F)₂, CF₂CF₂(SO₂F)₂, CH₂CH₂(SO₂F)(SO₂OLi), CH₂CH₂(SO₂F)(SO₂OCH₂CCH), CH₂(SO₂CF₃)₂, CH₂(SO₂CF₃)(SO₂ONa), and CH₂(SO₂CF₃)(SO₂OCH₃).

The above compounds correspond to the compounds described as specific examples of the compound represented by the formula (1) described above.

Of these, the compound represented by the formula (1) is preferably at least one selected from the group consisting of CH₂(SO₂F)₂, CH₂(SO₂F)(SO₂ONa), CH₂CH₂(SO₂F)₂, CH₂(SO₂CF₃)₂, and CH₂(SO₂CF₃)(SO₂ONa).

The compound represented by the formula (2) is preferably at least one selected from the group consisting of CH₃SO₂F, C₂H₅SO₂F, CH₂=CH-SO₂F, CF₃CH₂CH₂SO₂F, cyclohexylsulfonyl fluoride (C₆H₁₁SO₂F), phenylsulfonyl fluoride (C₆H₅SO₂F), CH₃OSO₂F, CH₃CH₂OSO₂F, CH₂=CH-OSO₂F, CF₃CH₂OSO₂F, (CH₃)₂CH-OSO₂F, (CF₃)₂CH-OSO₂F, CH₃CH₂SO₂CF₃, CH₂=CH-SO₂CF₃, CF₃CH₂CH₂SO₂CF₃, CH₃OSO₂CF₃, CH₃CH₂OSO₂CF₃, NaO-SO₂CH₃, and NaO-SO₂CF₃.

The above compounds correspond to the compounds described as specific examples of the compound represented by the formula (2) described above.

In particular, the compound represented by the formula (2) is preferably at least one selected from the group consisting of CH₃SO₂F, C₂H₅SO₂F, CH₂=CH-SO₂F, CH₃OSO₂F, CH₂=CH-OSO₂F, CH₃OSO₂CF₃, NaO-SO₂CH₃, and NaO-SO₂CF₃.

In an aspect, the compound represented by the formula (2) is preferably at least one selected from the group consisting of C₂H₅SO₂F, CH₂=CH-SO₂F, CF₃CH₂CH₂SO₂F, cyclohexylsulfonyl fluoride (C₆H₁₁SO₂F), phenylsulfonyl fluoride (C₆H₅SO₂F), CH₃OSO₂F, CH₃CH₂OSO₂F, CH₂=CH-OSO₂F, CF₃CH₂OSO₂F, (CH₃)₂CH-OSO₂F, (CF₃)₂CH-OSO₂F, CH₃CH₂SO₂CF₃, CH₂=CH-SO₂CF₃, CF₃CH₂CH₂SO₂CF₃, CH₃OSO₂CF₃, CH₃CH₂OSO₂CF₃, NaO-SO₂CH₃, and NaO-SO₂CF₃.

In an aspect, the compound represented by the formula (2) is preferably at least one selected from the group consisting of C₂H₅SO₂F, CH₂=CH-SO₂F, CH₃OSO₂F, CH₂=CH-OSO₂F, CH₃OSO₂CF₃, NaO-SO₂CH₃, and NaO-SO₂CF₃.

The compound represented by the formula (5) is preferably at least one selected from the group consisting of methanesulfonic anhydride, 1,2,5-oxadithiolane-2,2,5,5-tetraoxide, and 1,3,2,4-dioxadithiane-2,2,4,4-tetraoxide.

The component (II) content y is not particularly limited but is preferably 0.01 mass% or more, more preferably 0.03 mass% or more, further preferably 0.08 mass% or more, particularly preferably 0.1 mass% or more, and most preferably 0.8 mass% or more with respect to the total amount of the electrolyte solution for a nonaqueous sodium ion battery. Further, the component (II) content y is not particularly limited but is preferably 10.0 mass% or less, more preferably 8.0 mass% or less, further preferably 5.5 mass% or less, yet still more preferably 5.0 mass% or less, particularly preferably 3.5 mass% or less, and most preferably 2.5 mass% or less with respect to the total amount of the electrolyte solution for a nonaqueous sodium ion battery. When the content y is 0.01 mass% or more, at least one of the cycle characteristic at a high temperature of 60°C or higher, (the effect of preventing) the gas generation amount during a high-temperature cycle test, and the high-temperature storage characteristic of the nonaqueous sodium ion battery can be improved. Further, when the content y is 10.0 mass% or less, the film formed on the electrode does not become too thick, and this hardly leads to an increase in resistance.

One type of the components (II) may be used alone, or two or more types thereof may be mixed and used in any combination and any proportion according to the application.

In an aspect, the component (II) content y preferably satisfies 0.01 mass% ≤ y ≤ 100 mass%, more preferably satisfies 0.03 mass% ≤ y ≤ 8.0 mass%, further preferably satisfies 0.08 mass% ≤ y ≤ 5.5 mass%, yet still more preferably satisfies 0.1 mass% ≤ y ≤ 5.0 mass%, particularly preferably satisfies 0.1 mass% ≤ y ≤ 3.5 mass% and most preferably satisfies 0.8 mass% ≤ y ≤ 2.5 mass% with respect to the total amount of the electrolyte solution for a nonaqueous sodium ion battery.

### [(III) Sodium Salt]

The type of the sodium salt of the solute is not particularly limited, and any sodium salt (excluding the fluorosulfate) can be used. Specific examples thereof include an electrolyte sodium salt represented by at least one selected from the group consisting of NaPF₆, NaBF₄, NaBF₂(C₂O₄), NaPF₄(C₂O₄), NaPF₂(C₂O₄)₂, NaSbF₆, NaAsF₆, NaClO₄, NaN(SO₂F)₂, NaN(SO₂CF₃)₂, NaN(SO₂F)(SO₂CF₃), NaN(CₐF₂ₐ₊₁SO₂)(C_{b}F_{2b+1}SO₂) (in which a and b are integers satisfying 2 ≤ a ≤ 20 and 2 ≤ b ≤ 20), NaSO₃CF₃, NaSO₃C₄F₉, NaN(POF₂)₂, NaN(POF₂)(SO₂F), NaPO₂F₂, NaC(SO₂CF₃)₃, NaPF₃(C₃F₇)₃, NaB(CF₃)₄, NaBF₃(C₂F₅), NaAlO₂, NaAlCl₄, NaCl, and NaI. One type of these solutes may be used alone, or two or more types thereof may be mixed and used in any combination and any proportion according to the application. Of these, in view of energy density, output characteristics, lifetime, and the like of the battery, NaPF₆, NaBF₂(C₂O₄), NaPF₄(C₂O₄), NaPF₂(C₂O₄)₂, NaN(SO₂F)₂, NaN(SO₂CF₃)₂, NaN(SO₂C₂F₃)₂, NaN(POF₂)₂, NaN(POF₂)(SO₂F), and NaPO₂F₂ are preferable, NaPF₆ and NaN(SO₂F)₂ are more preferable, and NaPF₆ is further preferable.

In a preferable aspect, the electrolyte solution for a nonaqueous sodium ion battery contains NaPF₆ as (III) sodium salt.

The concentration z of the sodium salt in the electrolyte solution for a nonaqueous sodium ion battery according to the present embodiment is not particularly restricted but is preferably 0.05 mol/L or more, more preferably 0.3 mol/L or more, and further preferably 0.8 mol/L or more and is preferably 5.0 mol/L or less, more preferably 2.0 mol/L or less, and further preferably 1.5 mol/L or less with respect to the total amount of the electrolyte solution for a nonaqueous sodium ion battery.

Setting the concentration to 0.05 mol/L or more allows easy prevention of deterioration of the cycle characteristic of the nonaqueous sodium ion battery due to a decrease in the ionic conductivity. On the other hand, setting the concentration to 5.0 mol/L or less allows easy prevention of an increase in the viscosity of the electrolyte solution for a nonaqueous sodium ion battery and a deterioration in the battery characteristic due to an accompanying decrease in the ionic conductivity.

One type of the components (III) may be used alone, or two or more types thereof may be mixed and used in any combination and any proportion according to the application.

In an aspect, the concentration z of the component (III) preferably satisfies 0.3 mol/L ≤ z ≤ 5.0 mol/L, more preferably satisfies 0.4 mol/L ≤ z ≤ 3.0 mol/L, further preferably satisfies 0.5 mol/L ≤ z ≤ 2.0 mol/L and particularly preferably satisfies 0.8 mol/L ≤ z ≤ 1.5 mol/L with respect to the total amount of the electrolyte solution for a nonaqueous sodium ion battery.

Some of the (III) sodium salts overlap with some of the components (II), but when the content is a predetermined amount or more (the concentration of the (III) sodium salt in the electrolyte solution for a nonaqueous sodium ion battery is 0.3 mol/L or more with respect to the total amount of the electrolyte solution for a nonaqueous sodium ion battery), the component functions as the main electrolyte ((III) sodium salt), and when the content is less than the predetermined amount, the component functions as an additive (the component (II)).

Here, the component (II) is a compound different from the (III) sodium salt.

For example, when (III) sodium salt is CF₃SO₃Na, the component (II) is a compound other than CF₃SO₃Na.

### [(IV) Nonaqueous Solvent]

The type of the nonaqueous solvent is not particularly limited, and any nonaqueous solvent can be used. Specific examples thereof include, for example, the following nonaqueous solvents.

Examples of a cyclic ester include cyclic carbonates such as ethylene carbonate, propylene carbonate, and butylene carbonate, γ-butyrolactone, γ-valerolactone, and the like.

Examples of a chain ester include chain carbonates such as dimethyl carbonate, diethyl carbonate, and ethyl methyl carbonate, methyl acetate, ethyl acetate, methyl propionate, ethyl propionate, and the like.

Examples of a cyclic ether include tetrahydrofuran, 2-methyltetrahydrofuran, 1,3-dioxolane, 2-methyl-1,3-dioxolane, 4-methyl-1,3-dioxolane, 1,3-dioxane, and the like.

Examples of a chain ether include dimethoxyethane, diethoxyethane, diethyl ether, ethoxy-methoxy ethane, diethylene glycol dimethyl ether, triethylene glycol dimethyl ether, tetraethylene glycol dimethyl ether, dipropylene glycol dimethyl ether, and the like.

Examples of a sulfur-containing nonaqueous solvent include dimethyl sulfoxide, sulfolane, and the like.

Further, one type of the nonaqueous solvents used in the present embodiment may be used alone, or two or more types thereof may be mixed and used in any combination and any proportion according to the application.

In a preferable aspect, the electrolyte solution for a nonaqueous sodium ion battery contains, as the nonaqueous solvent, at least one selected from the group consisting of a cyclic ester, a chain ester, a cyclic ether, and a chain ether.

In a preferable aspect, the electrolyte solution for a nonaqueous sodium ion battery contains a cyclic ester as the nonaqueous solvent, and the cyclic ester is a cyclic carbonate. Further, in a preferable aspect, the electrolyte solution for a nonaqueous sodium ion battery contains a chain ester as the nonaqueous solvent, and the chain ester is a chain carbonate.

Further, the electrolyte solution for a nonaqueous sodium ion battery more preferably contains at least one selected from the group consisting of ethylene carbonate, propylene carbonate, butylene carbonate, dimethyl carbonate, diethyl carbonate, ethyl methyl carbonate, γ-butyrolactone, methyl acetate, ethyl acetate, ethyl propionate, 1,3-dioxolane, 2-methyl-1,3-dioxolane, 4-methyl-1,3-dioxolane, dimethoxyethane, diethoxyethane, ethoxy-methoxy ethane, diethylene glycol dimethyl ether, triethylene glycol dimethyl ether, tetraethylene glycol dimethyl ether, and dipropylene glycol dimethyl ether as the nonaqueous solvent.

One type of these nonaqueous solvents may be used alone, or two or more types thereof may be mixed and used in any combination and any proportion according to the application.

### [Other Additives]

Another additive typically used in an electrolyte solution for a nonaqueous sodium ion battery may be added at any proportion to the electrolyte solution for a nonaqueous sodium ion battery according to the present embodiment without departing from the gist of the present disclosure.

In a preferable aspect, the electrolyte solution for a nonaqueous sodium ion battery according to the present embodiment preferably further contains at least one compound selected from the group consisting of a compound represented by the following formula (3) and a compound represented by the following formula (4).

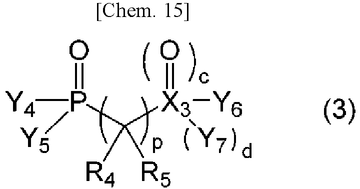

[In the formula (3), p represents an integer of 1-4.

R₄ and R₅ each independently represent a hydrogen atom, a halogen atom, a hydrocarbon group having 1 to 10 carbon atoms (the hydrocarbon group may have at least one selected from the group consisting of a heteroatom and a halogen atom and may have a branched chain or a cyclic structure when the number of carbon atoms is 3 or more), an alkoxy group having 1 to 10 carbon atoms, an alkenyloxy group having 2 to 10 carbon atoms, an alkynyloxy group having 2 to 10 carbon atoms, a cycloalkoxy group having 3 to 10 carbon atoms, a cycloalkenyloxy group having 3 to 10 carbon atoms, or an aryloxy group having 6 to 10 carbon atoms.

X₃ represents a phosphorus atom or a sulfur atom. When X₃ is a phosphorus atom, c = 1, and d = 1, and when X₃ is a sulfur atom, c = 2, and d = 0.

Y₄ to Y₇ each independently represent a halogen atom, a hydrocarbon group having 1 to 10 carbon atoms (the hydrocarbon group may have at least one selected from the group consisting of a heteroatom and a halogen atom and may have a branched chain or a cyclic structure when the number of carbon atoms is 3 or more), an alkoxy group having 1 to 10 carbon atoms, an alkenyloxy group having 2 to 10 carbon atoms, an alkynyloxy group having 2 to 10 carbon atoms, a cycloalkoxy group having 3 to 10 carbon atoms, a cycloalkenyloxy group having 3 to 10 carbon atoms, an aryloxy group having 6 to 10 carbon atoms, or -O⁻(M₄^{F+})_{f}, M₄^{F+} represents a proton, a metal cation, or an onium cation, and F represents a valence of the cation. f represents a number satisfying F × f = 1.]

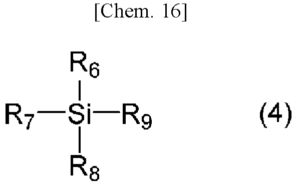

[In the formula (4), R₆ to R₉ each independently represent a hydrogen atom, a halogen atom, a hydrocarbon group having 1 to 10 carbon atoms (the hydrocarbon group may have at least one selected from the group consisting of a heteroatom and a halogen atom and may have a branched chain or a cyclic structure when the number of carbon atoms is 3 or more), an alkoxy group having 1 to 10 carbon atoms (the alkoxy group may have a halogen atom), an alkenyloxy group having 2 to 10 carbon atoms, an alkynyloxy group having 2 to 10 carbon atoms, a cycloalkoxy group having 3 to 10 carbon atoms, a cycloalkenyloxy group having 3 to 10 carbon atoms, or an aryloxy group having 6 to 10 carbon atoms.]

When R₄ and R₅ represent a halogen atom, examples of the halogen atom include a fluorine atom, a chlorine atom, a bromine atom, an iodine atom, and the like.

When R₄ and R₅ represent a hydrocarbon group having 1 to 10 carbon atoms, the hydrocarbon group is not particularly limited, but examples thereof include an alkyl group having 1 to 10 carbon atoms, an alkenyl group having 2 to 10 carbon atoms, an alkynyl group having 2 to 10 carbon atoms, a cycloalkyl group having 3 to 10 carbon atoms, a cycloalkenyl group having 3 to 10 carbon atoms, an aryl group having 6 to 10 carbon atoms, and a group having 1 to 10 carbon atoms in which these groups are combined.

When R₄ and R₅ are an alkyl group having 1 to 10 carbon atoms, examples of the alkyl group include a methyl group, an ethyl group, an n-propyl group, an isopropyl group, an n-butyl group, a sec-butyl group, an isobutyl group, a tert-butyl group, an n-pentyl group, an n-hexyl group, an n-octyl group, an n-decyl group, and the like.

When R₄ and R₅ are an alkenyl group having 2 to 10 carbon atoms, examples of the alkenyl group include a vinyl group, an allyl group, a 1-propenyl group, an isopropenyl group, a 2-butenyl group, a 1,3-butadienyl group, and the like.

When R₄ and R₅ are an alkynyl group having 2 to 10 carbon atoms, examples of the alkynyl group include an ethynyl group, a 1-propynyl group, a 2-propynyl group, a 1,1-dimethyl-2-propynyl group, and the like.

When R₄ and R₅ are a cycloalkyl group having 3 to 10 carbon atoms, examples of the cycloalkyl group include a cyclopentyl group, a cyclohexyl group, and the like.

When R₄ and R₅ are a cycloalkenyl group having 3 to 10 carbon atoms, examples of the cycloalkenyl group include a cyclopentenyl group, a cyclohexenyl group, and the like.

When R₄ and R₅ are an aryl group having 6 to 10 carbon atoms, examples of the aryl group include a phenyl group, a naphthyl group, and the like.

The above hydrocarbon group may have a heteroatom. Examples of the heteroatom include an oxygen atom, a sulfur atom, a nitrogen atom, and the like.

Any hydrogen atom of the above hydrocarbon group may be substituted with a halogen atom. Examples of the halogen atom include a fluorine atom, a chlorine atom, a bromine atom, an iodine atom, and the like, and a fluorine atom is preferable.

The hydrocarbon group having a halogen atom and having 1 to 10 carbon atoms is not particularly limited, but examples thereof include a trifluoromethyl group and the like when the number of carbon atoms is 1.

The number of carbon atoms of the hydrocarbon group having 1 to 10 carbon atoms represents the numbers of carbon atoms as R₄ and R₅.

When R₄ and R₅ represent an alkoxy group having 1 to 10 carbon atoms, the alkoxy group having 1 to 10 carbon atoms is not particularly limited but may be linear or branched.

The linear alkoxy group is preferably an alkoxy group having 1 to 6 carbon atoms. An alkoxy group having 1 to 3 carbon atoms is more preferable.

As the branched alkoxy group, an alkoxy group having 3 to 10 carbon atoms is preferable, and an alkoxy group having 3 to 6 carbon atoms is more preferable.

When R₄ and R₅ represent an alkenyloxy group having 2 to 10 carbon atoms, the alkenyloxy group having 2 to 10 carbon atoms is not particularly limited but may be linear or branched. An alkenyloxy group having 2 to 6 carbon atoms is preferable, and an alkenyloxy group having 2 to 3 carbon atoms is more preferable.

When R₄ and R₅ represent an alkynyloxy group having 2 to 10 carbon atoms, the alkynyloxy group having 2 to 10 carbon atoms is not particularly limited but may be linear or branched. An alkynyloxy group having 2 to 6 carbon atoms is preferable, and an alkynyloxy group having 2 to 3 carbon atoms is more preferable.

When R₄ and R₅ represent a cycloalkoxy group having 3 to 10 carbon atoms, the cycloalkoxy group having 3 to 10 carbon atoms is not particularly limited but may be monocyclic or polycyclic. A cycloalkoxy group having 3 to 8 carbon atoms is preferable, and a cycloalkoxy group having 3 to 6 carbon atoms is more preferable.

When R₄ and R₅ represent a cycloalkenyloxy group having 3 to 10 carbon atoms, the cycloalkenyloxy group having 3 to 10 carbon atoms is not particularly limited but may be monocyclic or polycyclic. A cycloalkenyloxy group having 3 to 8 carbon atoms is preferable, and a cycloalkenyloxy group having 3 to 6 carbon atoms is more preferable.

When R₄ and R₅ represent an aryloxy group having 6 to 10 carbon atoms, the aryloxy group having 6 to 10 carbon atoms is not particularly limited but may be monocyclic or polycyclic, and examples thereof include a phenyloxy group, a naphthyloxy group, and the like.

In a preferable aspect, R₄ preferably represents a hydrogen atom, a fluorine atom, or a hydrocarbon group having 1 to 10 carbon atoms.

In a preferable aspect, R₅ preferably represents a hydrogen atom, a fluorine atom, or a hydrocarbon group having 1 to 10 carbon atoms.

When Y₄ to Y₇ represent a halogen atom, examples of the halogen atom include a fluorine atom, a chlorine atom, a bromine atom, an iodine atom, and the like.

When Y₄ to Y₇ represent a hydrocarbon group having 1 to 10 carbon atoms, the hydrocarbon group is not particularly limited, but examples thereof include an alkyl group having 1 to 10 carbon atoms, an alkenyl group having 2 to 10 carbon atoms, an alkynyl group having 2 to 10 carbon atoms, a cycloalkyl group having 3 to 10 carbon atoms, a cycloalkenyl group having 3 to 10 carbon atoms, an aryl group having 6 to 10 carbon atoms, and a group having 1 to 10 carbon atoms in which these groups are combined.

When Y₄ to Y₇ are an alkyl group having 1 to 10 carbon atoms, examples of the alkyl group include a methyl group, an ethyl group, an n-propyl group, an isopropyl group, an n-butyl group, a sec-butyl group, an isobutyl group, a tert-butyl group, an n-pentyl group, an n-hexyl group, an n-octyl group, an n-decyl group, and the like.

When Y₄ to Y₇ are an alkenyl group having 2 to 10 carbon atoms, examples of the alkenyl group include a vinyl group, an allyl group, a 1-propenyl group, an isopropenyl group, a 2-butenyl group, a 1,3-butadienyl group, and the like.

When Y₄ to Y₇ are an alkynyl group having 2 to 10 carbon atoms, examples of the alkynyl group include an ethynyl group, a 1-propynyl group, a 2-propynyl group, a 1,1-dimethyl-2-propynyl group, and the like.

When Y₄ to Y₇ are a cycloalkyl group having 3 to 10 carbon atoms, examples of the cycloalkyl group include a cyclopentyl group, a cyclohexyl group, and the like.

When Y₄ to Y₇ are a cycloalkenyl group having 3 to 10 carbon atoms, examples of the cycloalkenyl group include a cyclopentenyl group, a cyclohexenyl group, and the like.

When Y₄ to Y₇ are an aryl group having 6 to 10 carbon atoms, examples of the aryl group include a phenyl group, a naphthyl group, and the like.

The above hydrocarbon group may have a heteroatom. Examples of the heteroatom include an oxygen atom, a sulfur atom, a nitrogen atom, and the like.

Any hydrogen atom of the above hydrocarbon group may be substituted with a halogen atom. Examples of the halogen atom include a fluorine atom, a chlorine atom, a bromine atom, an iodine atom, and the like, and a fluorine atom is preferable.

The hydrocarbon group having a halogen atom and having 1 to 10 carbon atoms is not particularly limited, but examples thereof include a trifluoromethyl group and the like when the number of carbon atoms is 1.

The number of carbon atoms of the hydrocarbon group having 1 to 10 carbon atoms represents the numbers of carbon atoms as Y₄ to Y₇.

When Y₄ to Y₇ represent an alkoxy group having 1 to 10 carbon atoms, the alkoxy group having 1 to 10 carbon atoms is not particularly limited but may be linear or branched.

The linear alkoxy group is preferably an alkoxy group having 1 to 6 carbon atoms. An alkoxy group having 1 to 3 carbon atoms is more preferable.

As the branched alkoxy group, an alkoxy group having 3 to 10 carbon atoms is preferable, and an alkoxy group having 3 to 6 carbon atoms is more preferable.

When Y₄ to Y₇ represent an alkenyloxy group having 2 to 10 carbon atoms, the alkenyloxy group having 2 to 10 carbon atoms is not particularly limited but may be linear or branched. An alkenyloxy group having 2 to 6 carbon atoms is preferable, and an alkenyloxy group having 2-3 carbon atoms is more preferable.

When Y₄ to Y₇ represent an alkynyloxy group having 2 to 10 carbon atoms, the alkynyloxy group having 2 to 10 carbon atoms is not particularly limited but may be linear or branched. An alkynyloxy group having 2 to 6 carbon atoms is preferable, and an alkynyloxy group having 2 to 3 carbon atoms is more preferable.

When Y₄ to Y₇ represent a cycloalkoxy group having 3 to 10 carbon atoms, the cycloalkoxy group having 3 to 10 carbon atoms is not particularly limited but may be monocyclic or polycyclic. A cycloalkoxy group having 3 to 8 carbon atoms is preferable, and a cycloalkoxy group having 3 to 6 carbon atoms is more preferable.

When Y₄ to Y₇ represent a cycloalkenyloxy group having 3 to 10 carbon atoms, the cycloalkenyloxy group having 3 to 10 carbon atoms is not particularly limited but may be monocyclic or polycyclic. A cycloalkenyloxy group having 3 to 8 carbon atoms is preferable, and a cycloalkenyloxy group having 3 to 6 carbon atoms is more preferable.

When Y₄ to Y₇ represent an aryloxy group having 6 to 10 carbon atoms, the aryloxy group having 6 to 10 carbon atoms is not particularly limited but may be monocyclic or polycyclic, and examples thereof include a phenyloxy group, a naphthyloxy group, and the like.

M₄^{F+} represents a proton, a metal cation, or an onium cation, and F represents a valence of the cation.

When M₄^{F+} represents a metal cation, examples of the metal cation include an alkali metal cation such as a lithium ion, a sodium ion, and a potassium ion and an alkaline earth metal cation such as a magnesium ion and a calcium ion.

When M₄^{F+} represents an onium cation, examples of the onium cation include a trialkylammonium ion, a tetraalkylammonium ion, a tetraalkylphosphonium ion, an imidazolium ion, an ammonium ion having a spiro skeleton, and the like.

F represents a valence of the cation. When M₄^{F+} represents a monovalent cation, F is 1, and when M₄^{F+} represents a divalent cation, F is 2.

M₄^{F+} preferably represents a metal cation, more preferably a lithium ion or a sodium ion, and particularly preferably a sodium ion.

In a preferable aspect, Y₄ preferably represents a fluorine atom, a hydrocarbon group having 1 to 10 carbon atoms, an alkoxy group having 1 to 10 carbon atoms, or -O⁻(M₄^{F+})_{f}.

In a preferable aspect, Y₅ preferably represents a fluorine atom, a hydrocarbon group having 1 to 10 carbon atoms, an alkoxy group having 1 to 10 carbon atoms, or -O⁻(M₄^{F+})_{f}.

In a preferable aspect, Y₆ preferably represents a fluorine atom, a hydrocarbon group having 1 to 10 carbon atoms, an alkoxy group having 1 to 10 carbon atoms, or -O⁻(M₄^{F+})_{f}.

In a preferable aspect, Y₇ preferably represents a fluorine atom, a hydrocarbon group having 1 to 10 carbon atoms, an alkoxy group having 1 to 10 carbon atoms, or -O⁻(M₄^{F+})_{f}.

Specific examples of the compound represented by the formula (3) are shown below, but the present disclosure is not limited thereto.

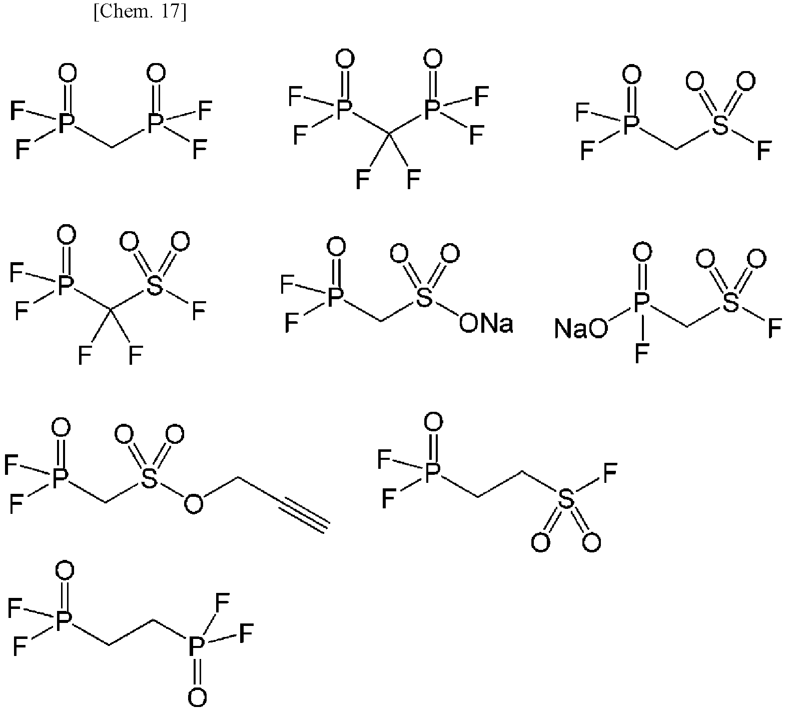

In the formula (4), R₆ to R₉ each independently represent a hydrogen atom, a halogen atom, a hydrocarbon group having 1 to 10 carbon atoms (the hydrocarbon group may have at least one selected from the group consisting of a heteroatom and a halogen atom and may have a branched chain or a cyclic structure when the number of carbon atoms is 3 or more), an alkoxy group having 1 to 10 carbon atoms (the alkoxy group may have a halogen atom), an alkenyloxy group having 2 to 10 carbon atoms, an alkynyloxy group having 2 to 10 carbon atoms, a cycloalkoxy group having 3 to 10 carbon atoms, a cycloalkenyloxy group having 3 to 10 carbon atoms, or an aryloxy group having 6 to 10 carbon atoms.

When R₆ to R₉ represent a halogen atom, examples of the halogen atom include a fluorine atom, a chlorine atom, a bromine atom, an iodine atom, and the like.

When R₆ to R₉ represent a hydrocarbon group having 1 to 10 carbon atoms, the hydrocarbon group is not particularly limited, but examples thereof include an alkyl group having 1 to 10 carbon atoms, an alkenyl group having 2 to 10 carbon atoms, an alkynyl group having 2 to 10 carbon atoms, a cycloalkyl group having 3 to 10 carbon atoms, a cycloalkenyl group having 3 to 10 carbon atoms, an aryl group having 6 to 10 carbon atoms, and a group having 1 to 10 carbon atoms in which these groups are combined.

When R₆ to R₉ are an alkyl group having 1 to 10 carbon atoms, examples of the alkyl group include a methyl group, an ethyl group, an n-propyl group, an isopropyl group, an n-butyl group, a sec-butyl group, an isobutyl group, a tert-butyl group, an n-pentyl group, an n-hexyl group, an n-octyl group, an n-decyl group, and the like.

When R₆ to R₉ are an alkenyl group having 2 to 10 carbon atoms, examples of the alkenyl group include a vinyl group, an allyl group, a 1-propenyl group, an isopropenyl group, a 2-butenyl group, a 1,3-butadienyl group, and the like.

When R₆ to R₉ are an alkynyl group having 2 to 10 carbon atoms, examples of the alkynyl group include an ethynyl group, a 1-propynyl group, a 2-propynyl group, a 1,1-dimethyl-2-propynyl group, and the like.

When R₆ to R₉ are a cycloalkyl group having 3 to 10 carbon atoms, examples of the cycloalkyl group include a cyclopentyl group, a cyclohexyl group, and the like.

When R₆ to R₉ are a cycloalkenyl group having 3 to 10 carbon atoms, examples of the cycloalkenyl group include a cyclopentenyl group, a cyclohexenyl group, and the like.

When R₆ to R₉ are an aryl group having 6 to 10 carbon atoms, examples of the aryl group include a phenyl group, a naphthyl group, and the like.

The above hydrocarbon group may have a heteroatom. Examples of the heteroatom include an oxygen atom, a sulfur atom, a nitrogen atom, and the like.

Any hydrogen atom of the above hydrocarbon group may be substituted with a halogen atom. Examples of the halogen atom include a fluorine atom, a chlorine atom, a bromine atom, an iodine atom, and the like, and a fluorine atom is preferable.

The hydrocarbon group having a halogen atom and having 1 to 10 carbon atoms is not particularly limited, but examples thereof include a trifluoromethyl group and the like when the number of carbon atoms is 1.

The number of carbon atoms of the hydrocarbon group having 1 to 10 carbon atoms represents the numbers of carbon atoms as R₆ to R₉.

When R₆ to R₉ represent an alkoxy group having 1 to 10 carbon atoms, the alkoxy group having 1 to 10 carbon atoms is not particularly limited but may be linear or branched.

The linear alkoxy group is preferably an alkoxy group having 1 to 6 carbon atoms. An alkoxy group having 1 to 3 carbon atoms is more preferable.

As the branched alkoxy group, an alkoxy group having 3 to 10 carbon atoms is preferable, and an alkoxy group having 3 to 6 carbon atoms is more preferable.

The alkoxy group having 1 to 10 carbon atoms may have a halogen atom. Examples of the halogen atom include a fluorine atom, a chlorine atom, a bromine atom, an iodine atom, and the like, and a fluorine atom is preferable.

When R₆ to R₉ represent an alkenyloxy group having 2 to 10 carbon atoms, the alkenyloxy group having 2 to 10 carbon atoms is not particularly limited but may be linear or branched. An alkenyloxy group having 2 to 6 carbon atoms is preferable, and an alkenyloxy group having 2 to 3 carbon atoms is more preferable.

When R₆ to R₉ represent an alkynyloxy group having 2 to 10 carbon atoms, the alkynyloxy group having 2 to 10 carbon atoms is not particularly limited but may be linear or branched. An alkynyloxy group having 2 to 6 carbon atoms is preferable, and an alkynyloxy group having 2 to 3 carbon atoms is more preferable.

When R₆ to R₉ represent a cycloalkoxy group having 3 to 10 carbon atoms, the cycloalkoxy group having 3 to 10 carbon atoms is not particularly limited but may be monocyclic or polycyclic. A cycloalkoxy group having 3 to 8 carbon atoms is preferable, and a cycloalkoxy group having 3 to 6 carbon atoms is more preferable.

When R₆ to R₉ represent a cycloalkenyloxy group having 3 to 10 carbon atoms, the cycloalkenyloxy group having 3 to 10 carbon atoms is not particularly limited but may be monocyclic or polycyclic. A cycloalkenyloxy group having 3 to 8 carbon atoms is preferable, and a cycloalkenyloxy group having 3 to 6 carbon atoms is more preferable.

When R₆ to R₉ represent an aryloxy group having 6 to 10 carbon atoms, the aryloxy group having 6 to 10 carbon atoms is not particularly limited but may be monocyclic or polycyclic, and examples thereof include a phenyloxy group, a naphthyloxy group, and the like.

In a preferable aspect, R₆ preferably represents a fluorine atom, a hydrocarbon group having 1 to 10 carbon atoms, or an alkoxy group having 1 to 10 carbon atoms. The hydrocarbon group having 1 to 10 carbon atoms preferably represents an alkenyl group having 2 to 10 carbon atoms or an alkynyl group having 2 to 10 carbon atoms.

In a preferable aspect, R₇ preferably represents a fluorine atom, a hydrocarbon group having 1 to 10 carbon atoms, or an alkoxy group having 1 to 10 carbon atoms. The hydrocarbon group having 1 to 10 carbon atoms preferably represents an alkenyl group having 2 to 10 carbon atoms or an alkynyl group having 2 to 10 carbon atoms.

In a preferable aspect, R₈ preferably represents a fluorine atom, a hydrocarbon group having 1 to 10 carbon atoms, or an alkoxy group having 1 to 10 carbon atoms. The hydrocarbon group having 1 to 10 carbon atoms preferably represents an alkenyl group having 2 to 10 carbon atoms or an alkynyl group having 2 to 10 carbon atoms.

In a preferable aspect, R₉ preferably represents a fluorine atom, a hydrocarbon group having 1 to 10 carbon atoms, or an alkoxy group having 1 to 10 carbon atoms. The hydrocarbon group having 1 to 10 carbon atoms preferably represents an alkenyl group having 2 to 10 carbon atoms or an alkynyl group having 2 to 10 carbon atoms.

Specific examples of the compound represented by the formula (4) are shown below, but the present disclosure is not limited thereto.

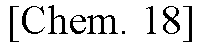

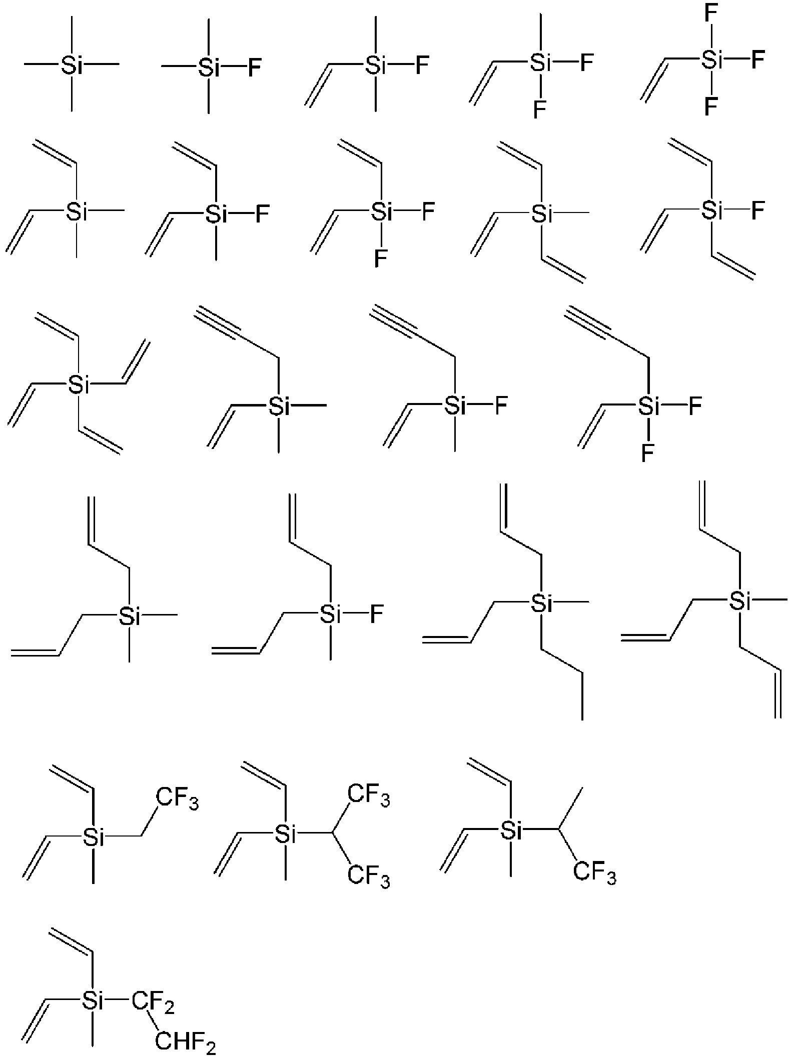

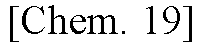

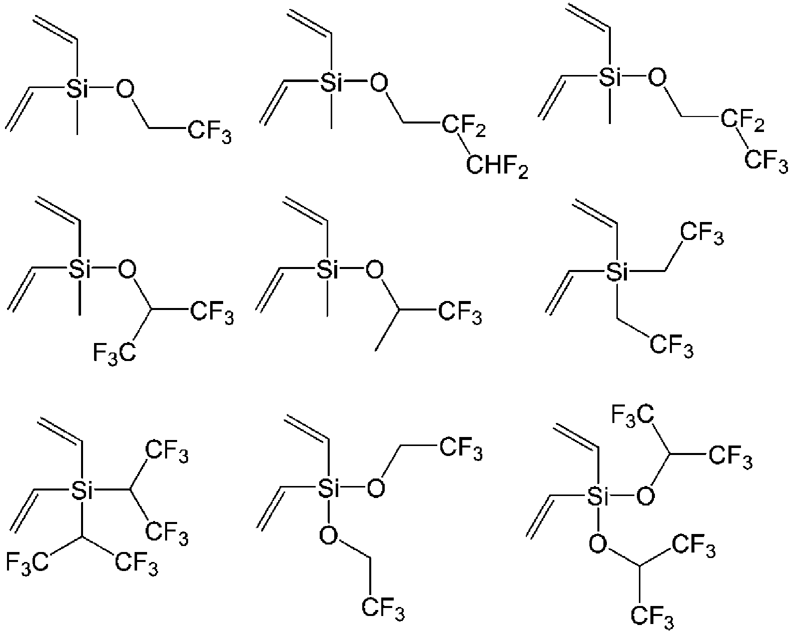

Further, as the "Other Additives" other than above, a compound having an overcharge prevention effect, a negative electrode film-forming effect, and a positive electrode protection effect, such as cyclohexylbenzene, biphenyl, t-butylbenzene, t-amylbenzene, fluorobenzene, vinylene carbonate, a vinylene carbonate oligomer (The number average molecular weight is 170 to 5000. Here, the number average molecular weight is a number average molecular weight in terms of standard polystyrene measured by gel permeation chromatography (GPC) using tetrahydrofuran (THF) as a solvent. The same applies hereinafter.), vinyl ethylene carbonate, difluoroanisole, fluoroethylene carbonate, ethynylethylene carbonate, trans-difluoroethylene carbonate, dimethylvinylene carbonate, 1,3,2-dioxathiolane-2,2-dioxide, 4-propyl-1,3,2-dioxathiolane-2,2-dioxide, methylenemethane disulfonate, succinonitrile, (ethoxy)pentafluorocyclotriphosphazene, tetrafluoro(picolinato)phosphate, and 1,3-dimethyl-1,3-divinyl-1,3-di(1,1,1,3,3,3-hexafluoroisopropyl)disiloxane, may be added.

When the electrolyte solution for a nonaqueous sodium ion battery according to the present embodiment contains fluoroethylene carbonate, the content thereof is preferably not too large from the viewpoint of gas generation, and fluoroethylene carbonate does not have to be substantially contained. Substantially not contained means "less than 0.001 mass% with respect to the total amount of the electrolyte solution".

In a preferable aspect, the electrolyte solution for a nonaqueous sodium ion battery according to the present embodiment does not contain fluoroethylene carbonate.

When the electrolyte solution for a nonaqueous sodium ion battery according to the present embodiment contains 1,3,2-dioxathiolane-2,2-dioxide and/or 4-propyl-1,3,2-dioxathiolane-2,2-dioxide, the content thereof is preferably not too large from the viewpoint of storage stability, and when the electrolyte solution for a nonaqueous sodium ion battery contains 1,3,2-dioxathiolane-2,2-dioxide and/or 4-propyl-1,3,2-dioxathiolane-2,2-dioxide, the content thereof is preferably not too large from the viewpoint of storage stability, and these compounds do not have to be substantially contained.

In a preferable aspect, the electrolyte solution for a nonaqueous sodium ion battery according to the present embodiment does not contain 1,3,2-dioxathiolane-2,2-dioxide and/or 4-propyl-1,3,2-dioxathiolane-2,2-dioxide.

When the electrolyte solution for a nonaqueous sodium ion battery according to the present embodiment further contains at least one compound selected from the group consisting of the compound represented by the formula (3) and the compound represented by the formula (4), the content of at least one compound selected from the group consisting of the compound represented by the formula (3) and the compound represented by the formula (4) is preferably 0.01 mass% or more and 10 mass% or less with respect to the total amount of the electrolyte solution.

When the electrolyte solution for a nonaqueous sodium ion battery according to the present embodiment contains the other additive, the content thereof is preferably 0.01 mass% or more and 10 mass% or less with respect to the total amount of the electrolyte solution

Further, the above sodium salt (a sodium salt other than the sodium salt used as the solute (excluding those corresponding to the component (I) and the component (II))) can also be used as the other additive.

When the sodium salt is used as the other additive, the other additive content is preferably 0.3 mass% or more and 1.5 mass% or less with respect to the total amount of the electrolyte solution.

Further, the other additive may be a gelling agent or a crosslinked polymer. The electrolyte solution for a nonaqueous sodium ion battery according to the present embodiment can also be pseudo-solidified with the gelling agent or the crosslinked polymer, and the pseudo-solidified one is suitable, for example, for a sodium polymer battery.

### [2. Nonaqueous Sodium Ion Battery]

Next, the configuration of the nonaqueous sodium ion battery according to one embodiment of the present disclosure will be explained.

The nonaqueous sodium ion battery has at least a positive electrode, a negative electrode, and the electrolyte solution for a nonaqueous sodium ion battery according to the present embodiment.

The nonaqueous sodium ion battery according to the present embodiment has a characteristic that the electrolyte solution for a nonaqueous sodium ion battery according to the present embodiment is used, and for other members, those used in a general nonaqueous sodium ion battery are used. That is, the other members include a positive electrode and a negative electrode capable of occluding and discharging sodium, a current collector, a separator, an exterior body, and the like.

### [Positive Electrode]

The positive electrode material (positive electrode active material) is not particularly limited, but, for example, sodium-containing transition metal composite oxides such as NaCrO₂, NaFe_{0.5}Co_{0.5}O₂, NaFe_{0.4}Mn_{0.3}Ni_{0.3}O₂, NaNi_{0.3}Ti_{0.3}Mn_{0.2}O₂, Na_{2/3}Ni_{1/3}Ti_{1/6}Mn_{1/2}O₂, and Na_{2/3}Ni_{1/3}Mn_{2/3}O₂, these sodium-containing transition metal composite oxides in which a plurality of transition metals such as Co, Mn, and Ni are mixed, sodium-containing transition metal composite oxides in which a part of the transition metal of these sodium-containing transition metal composite oxides is substituted with another metal other than transition metals, polyanion type compounds such as NaFePO₄, NaVPO₄F, Na₃V₂(PO₄)₃, and Na₂Fe₂(SO₄)₃, oxides such as TiO₂, V₂O₅, and MoO₃, sulfides such as TiS₂ and FeS, conductive polymers such as polyacetylene, polyparaphenylene, polyaniline, and polypyrrole, activated carbon, radical-generating polymers, carbon materials, and the like are used.

In the positive electrode, for example, a positive electrode active material layer is formed on at least one surface of the positive electrode current collector. The positive electrode active material layer includes, for example, the positive electrode active material described above, a binder, and, when necessary, an electrically conductive agent. Examples of the binder include polytetrafluoroethylene, polyvinylidene fluoride, styrene-butadiene rubber (SBR) resin, and the like. As the electrically conductive agent, for example, carbon materials such as acetylene black, Ketjen black, carbon fiber, or graphite (granular graphite or flake graphite) can be used, and acetylene black or Ketjen black having low crystallinity is preferably used.

### [Negative Electrode]

The negative electrode material (negative electrode active material) is not particularly limited, but examples thereof include sodium metal and materials capable of occluding and discharging sodium ions. For example, sodium metal, an alloy of sodium metal and another metal such as tin, an intermetallic compound, various carbon materials such as hard carbon, a metal oxide such as titanium oxide, a metal nitride, (elemental) tin, a tin compound, activated carbon, a conductive polymer, and the like are used. In addition to these, (elemental) phosphorus such as red phosphorus and black phosphorus, phosphorus compounds such as Co-P, Cu-P, Sn-P, Ge-P, and Mo-P, (elemental) antimony, antimony compounds such as Sb/C and Bi-Sb, and the like are used. One type of these negative electrode active materials may be used alone, or two or more types thereof may be used in combination.

In the negative electrode, for example, a negative electrode active material layer is formed on at least one surface of the negative electrode current collector. The negative electrode active material layer includes, for example, the negative electrode active material described above, a binder, and, when necessary, an electrically conductive agent. Examples of the binder include polytetrafluoroethylene, polyvinylidene fluoride, styrene-butadiene rubber (SBR) resin, and the like. As the electrically conductive agent, for example, carbon materials such as acetylene black, Ketjen black, carbon fiber, or graphite (granular graphite or flake graphite) can be used.

### [Current Collector]

Copper, aluminum, stainless steel, nickel, titanium, alloys thereof, or the like can be used for the current collectors of the positive electrode and the negative electrode. An active material layer is formed on at least one surface of the current collector.

### [Separator]

As the separator for preventing contact between the positive electrode and the negative electrode, a nonwoven fabric or a porous sheet or film made of polyolefin (for example, polypropylene or polyethylene), paper, glass fiber, or the like is used. These are preferably microporous so that the electrolyte solution easily permeates and that the ions easily pass through.

### [Exterior Body]

As the exterior body, for example, a coin-shaped, cylindrical, square-shaped, or another form metal can, or a laminated exterior body can be used. Examples of the metal can material include nickel-plated steel plates, stainless steel plates, nickel-plated stainless steel plates, aluminum or alloys thereof, nickel, titanium, and the like. As the laminated exterior body, for example, an aluminum laminated film, a SUS laminated film, a silica-coated laminated film of polypropylene, polyethylene or the like, or the like can be used.

The configuration of the nonaqueous sodium ion battery according to the present embodiment is not particularly restricted but can be, for example, a configuration in which an electrode element including the positive electrode and the negative electrode arranged to face each other and a nonaqueous electrolyte solution are included in the exterior body. Further, the shape of the nonaqueous sodium ion battery according to the present embodiment is not particularly limited but can be a coin shape, a cylindrical shape, a square shape, an aluminum laminate sheet shape, or the like.

### [3. Method for Producing Nonaqueous Sodium Ion Battery]

The present disclosure also relates to a method for producing a nonaqueous sodium ion battery.

The production method is a method for producing a nonaqueous sodium ion battery, having
a step of preparing the electrolyte solution for a nonaqueous sodium ion battery of the present disclosure and
a step of filling an empty cell having at least a positive electrode and a negative electrode with the electrolyte solution for a nonaqueous sodium ion battery.

### Examples

Hereinafter, the present disclosure will be specifically explained with Examples, but the present disclosure is not limited by these Examples.

### [Production of Electrolyte Solution for Nonaqueous Sodium Ion Battery]

### (Production of Electrolyte Solution No. NaSO₃F(2.0)-PDI(1.0))

A mixed solvent in which propylene carbonate (hereinafter, also referred to as "PC"), ethylene carbonate (hereinafter, also referred to as "EC"), and ethyl methyl carbonate (hereinafter, also referred to as "EMC") were mixed at a volume ratio of PC:EC:EMC = 30:20:50 was used as (IV) nonaqueous solvent, and in the solvent, NaPF₆ as (III) sodium salt, sodium fluorosulfate (hereinafter, also referred to as "NaSO₃F") as (I) fluorosulfate, and pentamethylene diisocyanate (PDI) as (II) were dissolved at the concentrations shown in Table 1, thereby preparing an electrolyte solution No. NaSO₃F(2.0)-PDI(1.0). The above preparation was performed with the liquid temperature maintained in a range of 20 to 30°C.

In Tables 1, 8, 10, and 12 below, the concentrations (mass%) of (I) fluorosulfate, the component (II), and other additives represent contents (mass%) with respect to a total amount of the electrolyte solution for a nonaqueous sodium ion battery.

In Tables 1, 8, 10, and 12 below, a concentration (mol/L) of (III) sodium salt represents a concentration with respect to the total amount of the electrolyte solution for a nonaqueous sodium ion battery.

**Table 1**

| Electrolyte Solution Composition | | | | | | | | | |
|---|---|---|---|---|---|---|---|---|---|
| Electrolyte Solution No. | (I) Fluorosulfate | | (II) | | (III) Sodium Salt | | (IV) Nonaqueous Solvent | Other Additive | |
| | Type | Concentration [mass%] | Type | Concentration [mass%] | Type | Concentration [mol/L] | | Type | Concentration [mass%] |
| NaSO₃F(2.0)-PDI(1.0) | NaSO₃F | 2.0 | Pentamethylene diisocyanate | 1.0 | NaPF₆ | 1.0 | PC/EC/EMC 30/20/50 (vol%) | None | - |
| NaSO₃F(2.0)-HDI(1.0) | | | Hexamethylene diisocyanate | 1.0 | | | | | |
| NaSO₃F(2 0)-MBSF(1.0) | | | CH₂(SO₂F)₂ | 1.0 | | | | | |
| NaSO₃F(2.0)-ESF(1.0) | | | C₂H₅SO₂F | 1.0 | | | | | |
| NaSO₃F(2.0)-MSAn(1.0) | | | Methanesulfonic anhydride | 1.0 | | | | | |
| NaSO₃F(2.0)-ODTO(1.0) | | | 1,2,5-Oxadithiolane-2,2,5,5-tetraoxide | 1.0 | | | | | |
| NaSO₃F(2.0)-non | | | None | - | | | | | |
| non-PDI(1.0) | None | | Pentamethylene diisocyanate | 1.0 | | | | | |
| non-HDI(1.0) | | | Hexamethylene diisocyanate | 1.0 | | | | | |
| non-MBSF(1.0) | | | CH₂(SO₂F)₂ | 1.0 | | | | | |
| non-ESF(1.0) | | | C₂H₅SO₂F | 1.0 | | | | | |
| non-MSAn(1.0) | | | Methanesulfonic anhydride | 1.0 | | | | | |
| non-ODTO(10) | | | 1,2,5-Oxadithiolane-2,2,5,5-tetraoxide | 1.0 | | | | | |
| non-non | | | None | - | | | | | |

### (Production of Other Electrolyte Solutions According to Table 1)

Further, various electrolyte solutions shown in Table 1 were prepared in the same manner as the electrolyte solution No. NaSO₃F(2.0)-PDI(1.0) except that the concentration of (I) and the type and the concentration of (II) were changed to those shown in Table 1. The abbreviations in the tables are as follows.
PDI: pentamethylene diisocyanate
HDI: hexamethylene diisocyanate
MBSF: CH₂(SO₂F)₂
ESF: C₂H₅SO₂F
MSAn: methanesulfonic anhydride
ODTO: 1,2,5-oxadithiolane-2,2,5,5-tetraoxide

### [Example 1-1 and Comparative Examples 1-0 to 1-2]

A high-temperature cycle test was performed on each test cell produced using an electrolyte solution shown in Table 2 as a test electrolyte solution, NaNi_{0.3}Ti_{0.3}Mn_{0.2}O₂ as a positive electrode material, and hard carbon (Carbotron P manufactured by KUREHA CORPORATION) as a negative electrode material, and a cycle characteristic, a gas generation amount during the high-temperature cycle test, and a high-temperature storage characteristic were evaluated. The evaluation results are shown in Table 2. The test cells were produced as follows.

### A test positive electrode was produced by the following procedure.

A slurry solution was prepared by mixing 90 mass% of NaNi_{0.3}Ti_{0.3}Mn_{0.2}O₂ as the positive electrode active material, 5 mass% of acetylene black as an electrically conductive agent, and 5 mass% of polyvinylidene fluoride (PVDF) as a binder and further adding N-methylpyrrolidone as a solvent in an amount of 50 mass% with respect to the total mass of the positive electrode active material, the electrically conductive agent, and the binder. The slurry solution was applied onto an aluminum foil as a positive electrode current collector and dried at 150°C for 12 hours to obtain the test positive electrode including a positive electrode active material layer formed on a current collector.

### A test negative electrode was produced by the following procedure.

A slurry solution was prepared by mixing 90 mass% of a hard carbon powder (Carbotron P manufactured by KUREHA CORPORATION) as a negative electrode active material and 10 mass% of polyvinylidene fluoride (PVDF) as a binder and further adding N-methylpyrrolidone as a solvent in an amount of 50 mass% with respect to the total mass of the negative electrode active material and the binder. The slurry solution was applied onto an aluminum foil as a negative electrode current collector and dried at 150°C for 12 hours to obtain a test negative electrode including a negative electrode active material layer formed on a current collector.

The test positive electrode and the test negative electrode were placed via a polyethylene separator impregnated with the test electrolyte solution, and a test cell for 50 mAh having an aluminum laminate exterior was assembled.

### [Evaluation of High-temperature Cycle Characteristic]

The test cell was charged and discharged at a current density of 0.32 mA/cm² by a constant-current constant-voltage method at an ambient temperature of 25°C with an upper limit charge voltage of 4.1 V and a lower limit discharge voltage of 1.5 V, and then a charge and discharge test at an ambient temperature of 60°C was performed to evaluate the cycle characteristic. The cell was charged to 4.1 V and discharged to 1.5 V, and the charge-discharge cycle was repeated at a current density of 1.56 mA/cm². Further, the degree of deterioration of the cell was evaluated with the discharge capacity retention rate at the 500th cycle in the charge and discharge test at the ambient temperature of 60°C.

The "discharge capacity retention rate after a high-temperature cycle" represented by the discharge capacity retention rate at the 500th cycle was determined by the following equation. The discharge capacity at the first cycle in the charge and discharge test at the ambient temperature of 60°C was defined as an initial discharge capacity. Discharge capacity retention rate (%) after high-temperature cycle = (discharge capacity at 500th cycle/initial discharge capacity) × 100

### [Evaluation of Gas Generation Amount]

Before and after the evaluation of the high-temperature cycle characteristic, a volume of the cell was measured by Archimedes' method using silicone oil (silicone oil KF54, manufactured by Shin-Etsu Chemical Co., Ltd.), and a gas generation amount V (unit: cm³) (gas generation amount V = volume V2 of the cell after evaluation of high-temperature cycle characteristic - volume V1 of the cell before evaluation of high-temperature cycle characteristic) was determined. Based on the gas generation amount V, the "gas generation amount during the high-temperature cycle" was evaluated.

### [Evaluation of High-temperature Storage Characteristic]

The test cell was charged to an upper limit charge voltage of 4.1 V at a current density of 0.32 mA/cm² by the constant-current constant-voltage method at an ambient temperature of 25°C and then discharged to 1.5 V at a constant current of 0.32 mA/cm². The same charge and discharge cycle was repeated 10 times. The discharge capacity at the 10th cycle is defined as an "initial discharge capacity". Thereafter, the test cell was charged to an upper limit charge voltage of 4.1 V at a current density of 0.32 mA/cm² by the constant-current constant-voltage method at an ambient temperature of 25°C. The test cell was stored at 60°C for four weeks, and after cooling the battery to 25°C, the test cell was discharged to 1.5 V at a constant current of 0.32 mA/cm² at an ambient temperature of 25°C. The test cell was charged to an upper limit charge voltage of 4.1 V at a current density of 0.32 mA/cm² by the constant-current constant-voltage method and then discharged to 1.5 V at a constant current of 0.32 mA/cm². The discharge capacity at this time is defined as a "recovered capacity". The "recovered discharge capacity retention rate after high-temperature storage" was determined by the following equation.

### <Recovered Discharge Capacity Retention Rate after High-temperature Storage>

Recovered discharge capacity retention rate (%) after high-temperature storage = (recovered capacity/initial discharge capacity) × 100

**Table 2**

| Test Example | Electrolyte Solution No. | Positive Electrode Active Material | Negative Electrode Active Material | Evaluation Results | | |
|---|---|---|---|---|---|---|
| | | | | Discharge Capacity Retention Rate [%] after High-temperature Cycle | Gas Generation Amount [%] during High-temperature Cycle | Recovered Discharge Capacity Retention Rate [%] after High-temperature Storage |
| Comparative Example 1-0 | non-non | NaNi_{0.5}Ti_{0.3}Mn_{0.2}O₂ | Hard Carbon | 100 | 100 | 100 |
| Comparative Example 1-1 | NaSO₃F(2.0)-non | | | 117 | 56 | 105 |
| Comparative Example 1-2 | non-PDI(1.0) | | | 105 | 94 | 102 |
| Example 1-1 | NaSO₃F(2.0)-PDI(1.0) | | | 137 | 28 | 112 |

The evaluation results of the Example and the Comparative Examples in Table 2 are relative values based on the evaluation result of Comparative Example 1-0 regarded as 100%. Further, the same applies to Tables 3-7 below.

Here, a larger value for the "discharge capacity retention rate after the high-temperature cycle" is desirable, a larger value for the "recovered discharge capacity retention rate after high-temperature storage" is desirable, and a smaller value for the "gas generation amount during the high-temperature cycle" is desirable.

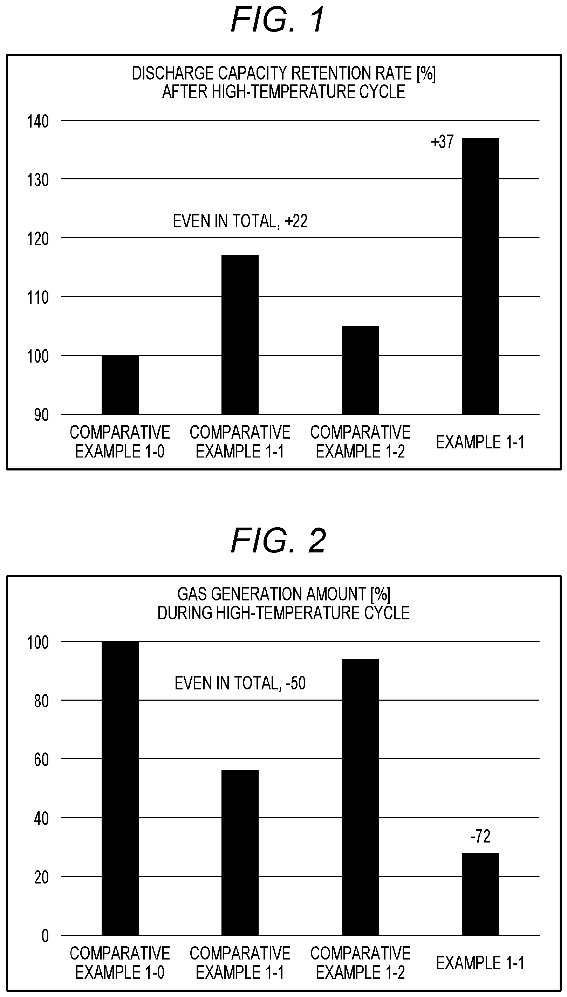

From the evaluation results in Table 2, it was found that the discharge capacity retention rate after the high-temperature cycle was further improved by containing both (I) and (II) in the nonaqueous electrolyte solution (Example 1-1), compared to the result of simply adding up the addition effect in the case of containing only (I) (Comparative Example 1-1) and the addition effect in the case of containing only (II) (Comparative Example 1-2) (FIG. 1).

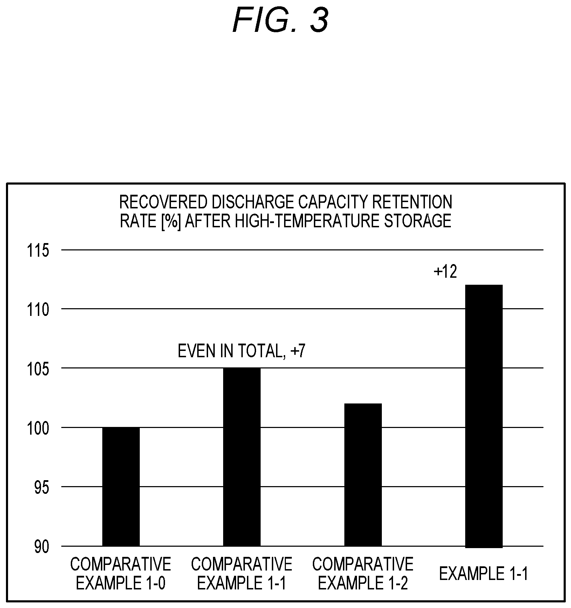

Further, it was found that the effect of preventing the gas generation amount during the high-temperature cycle and the recovered discharge capacity retention rate after high-temperature storage also tended to be further improved, similarly to the above (FIG. 2 and FIG. 3).

Although the mechanism of exhibiting the above tendency of the further improvement was not clear, this was presumed to be because an excellent film was formed on the electrode by containing both of (I) and (II) in the nonaqueous electrolyte solution.

### [Examples 1-2 to 1-6 and Comparative Examples 1-3 to 1-7]

Test cells were produced in the same manner as in Example 1-1 except that the electrolyte solutions shown in Tables 3-7 were used as the test electrolyte solutions, and performance evaluation was performed. The evaluation results are shown in Tables 3-7.

**Table 3**

| Test Example | Electrolyte Solution No. | Positive Electrode Active Material | Negative Electrode Active Material | Evaluation Results | | |
|---|---|---|---|---|---|---|
| | | | | Discharge Capacity Retention Rate [%] after High-temperature Cycle | Gas Generation Amount [%] during High-temperature Cycle | Recovered Discharge Capacity Retention Rate [%] after High-temperature Storage |
| Comparative Example 1-0 | non-non | NaNi_{0.5}Ti_{0.3}Mn_{0.2}O₂ | Hard Carbon | 100 | 100 | 100 |
| Comparative Example 1-1 | NaSO₃F(2.0)-non | | | 117 | 56 | 105 |
| Comparative Example 1-3 | non-HDI(1.0) | | | 103 | 95 | 101 |
| Example 1-2 | NaSO₃F(2.0)-HDI(1.0) | | | 134 | 31 | 113 |

**Table 4**

| Test Example | Electrolyte Solution No. | Positive Electrode Active Material | Negative Electrode Active Material | Evaluation Results | | |
|---|---|---|---|---|---|---|
| | | | | Discharge Capacity Retention Rate [%] after High-temperature Cycle | Gas Generation Amount [%] during High-temperature Cycle | Recovered Discharge Capacity Retention Rate [%] after High-temperature Storage |
| Comparative Example 1-0 | non-non | NaNi_{0.5}Ti_{0.3}Mn_{0.2}O₂ | Hard Carbon | 100 | 100 | 100 |
| Comparative Example 1-1 | NaSO₃F(2.0)-non | | | 117 | 56 | 105 |
| Comparative Example 1-4 | non-MBSF(1.0) | | | 106 | 98 | 103 |
| Example 1-3 | NaSO₃F(2.0)-MBSF(1.0) | | | 141 | 38 | 117 |

**Table 5**

| Test Example | Electrolyte Solution No. | Positive Electrode Active Material | Negative Electrode Active Material | Evaluation Results | | |
|---|---|---|---|---|---|---|
| | | | | Discharge Capacity Retention Rate [%] after High-temperature Cycle | Gas Generation Amount [%] during High-temperature Cycle | Recovered Discharge Capacity Retention Rate [%] after High-temperature Storage |
| Comparative Example 1-0 | non-non | NaNi_{0.5}Ti_{0.3}Mn_{0.2}O₂ | Hard Carbon | 100 | 100 | 100 |
| Comparative Example 1-1 | NaSO₃F(2.0)-non | | | 117 | 56 | 105 |
| Comparative Example 1-5 | non-ESF(1.0) | | | 104 | 95 | 102 |
| Example 1-4 | NaSO₃F(2.0)-ESF(1.0) | | | 136 | 35 | 118 |

**Table 6**

| Test Example | Electrolyte Solution No. | Positive Electrode Active Material | Negative Electrode Active Material | Evaluation Results | | |
|---|---|---|---|---|---|---|
| | | | | Discharge Capacity Retention Rate [%] after High-temperature Cycle | Gas Generation Amount [%] during High-temperature Cycle | Recovered Discharge Capacity Retention Rate [%] after High-temperature Storage |
| Comparative Example 1-0 | non-non | NaNi_{0.5}Ti_{0.3}Mn_{0.2}O₂ | Hard Carbon | 100 | 100 | 100 |
| Comparative Example 1-1 | NaSO₃F(2.0)-non | | | 117 | 56 | 105 |
| Comparative Example 1-6 | non-MSAn(1.0) | | | 105 | 93 | 102 |
| Example 1-5 | NaSO₃F(2.0)-MSAn(1.0) | | | 138 | 39 | 120 |

**Table 7**

| Test Example | Electrolyte Solution No. | Positive Electrode Active Material | Negative Electrode Active Material | Evaluation Results | | |
|---|---|---|---|---|---|---|
| | | | | Discharge Capacity Retention Rate [%] after High-temperature Cycle | Gas Generation Amount [%] during High-temperature Cycle | Recovered Discharge Capacity Retention Rate [%] after High-temperature Storage |
| Comparative Example 1-0 | non-non | NaNi_{0.5}Ti_{0.3}Mn_{0.2}O₂ | Hard Carbon | 100 | 100 | 100 |
| Comparative Example 1-1 | NaSO₃F(2.0)-non | | | 117 | 56 | 105 |
| Comparative Example 1-7 | non-ODTO(1.0) | | | 106 | 90 | 103 |
| Example 1-6 | NaSO₃F(2.0)-ODTO(1.0) | | | 137 | 33 | 121 |

From the evaluation results of Tables 3-7, it was found that even when the type of (II) was changed, there was a tendency for further improvement in the discharge capacity retention rate after the high-temperature cycle, the effect of suppressing the gas generation amount during the high-temperature cycle, and the recovered discharge capacity retention rate after high-temperature storage, similarly to Example 1-1.

### [Examples 2-1 to 2-8 and Comparative Examples 2-1 to 2-10]

Various electrolyte solutions shown in Table 8 were prepared in the same manner as the electrolyte solution No. NaSO₃F(2.0)-PDI(1.0) except that the composition of the electrolyte solution was changed to the compositions of the electrolyte solutions shown in Table 8.

Test cells were produced in the same manner as in Example 1-1 except that the electrolyte solutions shown in Table 9 were used as the test electrolyte solutions, and performance evaluation was performed. The evaluation results are shown in Table 9.

**Table 8**

| Electrolyte Solution Composition | | | | | | | | | |
|---|---|---|---|---|---|---|---|---|---|
| Electrolyte Solution No. | (I) Fluorosulfate | | (II) | | (III) Sodium Salt | | (IV) Nonaqueous Solvent | Other Additive | |
| | Type | Concentration [mass%] | Type | Concentration [mass%] | Type | Concentration [mol/L] | | Type | Concentration [mass%] |
| NaSO₃F(0.005)-PDI(1.0)-D | NaSO₃F | 0.005 | Pentamethylene diisocyanate | 1.0 | NaPF₆ | 1.0 | PC/EMC/DMC 30/40/30 (vol%) | None | - |
| NaSO₃F(0.01)-PDI(1.0)-D | | 0.01 | | | | | | | |
| NaSO₃F(0.1)-PDI(1.0)-D | | 0.1 | | | | | | | |
| NaSO₃F(1.0)-PDI(1.0)-D | | 1.0 | | | | | | | |
| NaSO₃F(2.0)-PDI(1.0)-D | | 2.0 | | | | | | | |
| NaSO₃F(5.0)-PDI(1.0)-D | | 5.0 | | | | | | | |
| NaSO₃F(7.0)-PDI(1.0)-D | | 7.0 | | | | | | | |
| NaSO₃F(8.0)-PDI(1.0)-D | | 8.0 | | | | | | | |
| NaSO₃F(0.005)-non-D | | 0.005 | None | - | | | | | |
| NaSO₃F(0.01)-non-D | | 0.01 | | | | | | | |
| NaSO₃F(0.1)-non-D | | 0.1 | | | | | | | |
| NaSO₃F(1.0)-non-D | | 1.0 | | | | | | | |
| NaSO₃F(2.0)-non-D | | 2.0 | | | | | | | |
| NaSO₃F(5.0)-non-D | | 5.0 | | | | | | | |
| NaSO₃F(7.0)-non-D | | 7.0 | | | | | | | |
| NaSO₃F(8.0)-non-D | | 8.0 | | | | | | | |
| non-PDI(1.0)-D | None | - | Pentamethylene diisocyanate | 1.0 | | | | | |
| non-non-D | None | - | None | - | | | | | |

**Table 9**

| Test Example | Electrolyte Solution No. | Positive Electrode Active Material | Negative Electrode Active Material | Evaluation Results | | |
|---|---|---|---|---|---|---|
| | | | | Discharge Capacity Retention Rate [%] after High-temperature Cycle | Gas Generation Amount [%] during High-temperature Cycle | Recovered Discharge Capacity Retention Rate [%] after High-temperature Storage |
| Example 2-1 | NaSO₃F(0.005)-PDI(1.0)-D | NaNi_{0.5}Ti_{0.3}Mn_{0.2}O₂ | Hard Carbon | 109 | 91 | 104 |
| Example 2-2 | NaSO₃F(0.01)-PDI(1.0)-D | | | 113 | 84 | 106 |
| Example 2-3 | NaSO₃F(0.1)-PDI(1.0)-D | | | 119 | 68 | 109 |
| Example 2-4 | NaSO₃F(1.0)-PDI(1.0)-D | | | 126 | 38 | 110 |
| Example 2-5 | NaSO₃F(2.0)-PDI(1.0)-D | | | 137 | 28 | 112 |
| Example 2-6 | NaSO₃F(5.0)-PDI(1.0)-D | | | 135 | 42 | 111 |
| Example 2-7 | NaSO₃F(7.0)-PDI(1.0)-D | | | 129 | 69 | 110 |
| Example 2-8 | NaSO₃F(8.0)-PDI(1.0)-D | | | 116 | 73 | 109 |
| Comparative Example 2-1 | NaSO₃F(0.005)-non-D | | | 100 | 100 | 101 |
| Comparative Example 2-2 | NaSO₃F(0.01)-non-D | | | 102 | 97 | 102 |
| Comparative Example 2-3 | NaSO₃F(0.1)-non-D | | | 103 | 95 | 102 |
| Comparative Example 2-4 | NaSO₃F(1.0)-non-D | | | 109 | 75 | 104 |
| Comparative Example 2-5 | NaSO₃F(2.0)-non-D | | | 115 | 67 | 105 |
| Comparative Example 2-6 | NaSO₃F(5.0)-non-D | | | 115 | 78 | 104 |
| Comparative Example 2-7 | NaSO₃F(7.0)-non-D | | | 113 | 85 | 104 |
| Comparative Example 2-8 | NaSO₃F(8.0)-non-D | | | 105 | 95 | 103 |
| Comparative Example 2-9 | non-PDI(1.0)-D | | | 105 | 94 | 102 |
| Comparative Example 2-10 | non-non-D | | | 100 | 100 | 100 |

From the evaluation results in Table 9, it was found that, even when the concentration of (I) was variously changed, at least one selected from the group consisting of the discharge capacity retention rate after the high-temperature cycle, the effect of preventing the gas generation amount during the high-temperature cycle, and the recovered discharge capacity retention rate after high-temperature storage was further improved by containing both of (I) and (II) in the nonaqueous electrolyte solution, compared to the result of simply adding up the addition effect in the case of containing only the corresponding (I) (Comparative Examples 2-1 to 2-8) and the addition effect in the case of containing only the (II) (Comparative Example 2-9).

In particular, it is seen that, when the concentration of (I) was 0.1 to 7.0 mass%, the improvement effect was large.

DMC represents dimethyl carbonate.

The evaluation results of the Examples and the Comparative Examples in Table 9 are relative values based on the evaluation result of Comparative Example 2-10 regarded as 100%. Further, the same applies to all the following tables.

### [Examples 3-1 to 3-6 and Comparative Examples 3-1 to 3-6]

Various electrolyte solutions shown in Table 10 were prepared in the same manner as the electrolyte solution No. NaSO₃F(2.0)-PDI(1.0) except that the composition of the electrolyte solution was changed to the compositions of the electrolyte solutions shown in Table 10.

Test cells were produced in the same manner as in Example 1-1 except that the electrolyte solutions shown in Table 11 were used as the test electrolyte solutions, and performance evaluation was performed. The evaluation results are shown in Table 11.

**Table 10**

| Electrolyte Solution Composition | | | | | | | | | |
|---|---|---|---|---|---|---|---|---|---|
| Electrolyte Solution No. | (I) Fluorosulfate | | (II) | | (III) Sodium Salt | | (IV) Nonaqueous Solvent | Other Additive | |
| | Type | Concentration [mass%] | Type | Concentration [mass%] | Type | Concentration [mol/L] | | Type | Concentration [mass%] |
| NaSO₃F(2.0)-MBSF(0.05)-D | NaSO₃F | 2.0 | CH₂(SO₂F)₂ | 0.05 | NaPF₆ | 1.0 | PC/EMC/DMC 30/40/30 (vol%) | None | - |
| NaSO₃F(2.0)-MBSF(0.1)-D | | | | 0.1 | | | | | |
| NaSO₃F (2.0)-MBSF(1.0)-D | | | | 1.0 | | | | | |
| NaSO₃F(2.0)-MBSF(2.0)-D | | | | 2.0 | | | | | |
| NaSO₃F(2.0)-MBSF(5.0)-D | | | | 5.0 | | | | | |
| NaSO₃F(2.0)-MBSF(6.0)-D | | | | 6.0 | | | | | |
| non-MBSF(0.05)-D | None | | | 0.05 | | | | | |
| non-MBSF(0.1)-D | | | | 0.1 | | | | | |
| non-MBSF(1.0)-D | | | | 1.0 | | | | | |
| non-MBSF(2.0)-D | | | | 2.0 | | | | | |
| non-MBSF(5.0)-D | | | | 5.0 | | | | | |
| non-MBSF(6.0)-D | | | | 6.0 | | | | | |
| NaSO₃F(2.0)-non-D | NaSO₃F | 2.0 | None | - | | | | | |
| non-non-D | None | - | None | - | | | | | |

**Table 11**

| Test Example | Electrolyte Solution No. | Positive Electrode Active Material | Negative Electrode Active Material | Evaluation Results | | |
|---|---|---|---|---|---|---|
| | | | | Discharge Capacity Retention Rate [%] after High-temperature Cycle | Gas Generation Amount [%] during High-temperature Cycle | Recovered Discharge Capacity Retention Rate [%] after High-temperature Storage |
| Example 3-1 | NaSO₃F(2.0)-MBSF(0.05)-D | NaNi_{0.5}Ti_{0.3}Mn_{0.2}O₂ | Hard Carbon | 117 | 59 | 107 |
| Example 3-2 | NaSO₃F(2.0)-MBSF(0.1)-D | | | 126 | 53 | 111 |
| Example 3-3 | NaSO₃F(2.0)-MBSF(1.0)-D | | | 141 | 38 | 117 |
| Example 3-4 | NaSO₃F(2.0)-MBSF(2.0)-D | | | 133 | 44 | 114 |
| Example 3-5 | NaSO₃F(2.0)-MBSF(5.0)-D | | | 126 | 57 | 112 |
| Example 3-6 | NaSO₃F(2.0)-MBSF(6.0)-D | | | 115 | 69 | 108 |
| Comparative Example 3-1 | non-MBSF(0.05)-D | | | 99 | 101 | 101 |
| Comparative Example 3-2 | non-MBSF(0.1)-D | | | 102 | 99 | 102 |
| Comparative Example 3-3 | non-MBSF(1.0)-D | | | 106 | 98 | 103 |
| Comparative Example 3-4 | non-MBSF(2.0)-D | | | 105 | 96 | 101 |
| Comparative Example 3-5 | non-MBSF(5.0)-D | | | 102 | 102 | 100 |
| Comparative Example 3-6 | non-MBSF(6.0)-D | | | 101 | 105 | 99 |
| Comparative Example 2-5 | NaSO₃F(2.0)-non-D | | | 115 | 67 | 105 |
| Comparative Example 2-10 | non-non-D | | | 100 | 100 | 100 |

From the evaluation results in Table 11, it was found that, even when the concentration of (II) was variously changed, at least one selected from the group consisting of the discharge capacity retention rate after the high-temperature cycle, the effect of preventing the gas generation amount during the high-temperature cycle, and the recovered discharge capacity retention rate after high-temperature storage was further improved by containing both of (I) and (II) in the nonaqueous electrolyte solution, compared to the result of simply adding up the addition effect in the case of containing only (I) (Comparative Example 2-5) and the addition effect in the case of containing only the corresponding (II)

### (Comparative Examples 3-1 to 3-6).

In particular, it was found that, when the concentration of (II) was 0.1 to 5 mass%, the improvement effect was large.

### [Examples 4-1 to 4-9 and Comparative Examples 4-1 to 4-8]

Various electrolyte solutions shown in Table 12 were prepared in the same manner as the electrolyte solution No. NaSO₃F(2.0)-PDI(1.0) except that the composition of the electrolyte solution was changed to the compositions of the electrolyte solutions shown in Table 12.

Test cells were produced in the same manner as in Example 1-1 except that the electrolyte solutions shown in Table 13 were used as the test electrolyte solutions, and performance evaluation was performed. The evaluation results are shown in Table 13.

The abbreviations in the tables are as follows.
DFPMSF: 1-(difluorophosphinyl)methanesulfonyl fluoride
MBPD: methylenebis(phosphonic difluoride)
TVS: tetravinylsilane
MSF: methanesulfonyl fluoride (CH₃SO₂F)

**Table 12**

| Electrolyte Solution Composition | | | | | | | | | |
|---|---|---|---|---|---|---|---|---|---|
| Electrolyte Solution No. | (I) Fluorosulfate | | (II) | | (III) Sodium Salt | | (IV) Nonaqueous Solvent | Other Additive | |
| | Type | Concentration [mass%] | Type | Concentra -tion [mass%] | Type | Concentration [mol/L] | | Type | Concentration [mass%] |
| NaSO₃F(2.0)-HDI(0.005)-DFPMSF(1.0)-D | NaSO₃F | 2.0 | Hexamethylene diisocyanate | 0.005 | NaPF₆ | 1.0 | PC/EMC/DMC 30/40/30 (vol%) | DFPMSF | 1.0 |
| NaSO₃F(2.0)-HDI(1.0)-DFPMSF(1.0)-D | | | | 1.0 | | | | | |
| non-HDI(0.005)-DFPMSF(1.0)-D | None | - | | 0.005 | | | | | |
| non-HDI(1.0)-DFPMSF(1.0)-D | | | | 1.0 | | | | | |
| NaSO₃F(2.0)-MBSF(0.005)-MBPD(1.0)-D | NaSO₃F | 2.0 | CH₂(SO₂F)₂ | 0.005 | | | | MBPD | 1.0 |
| NaSO₃F(2.0)-MBSF(1.0)-MBPD(1.0)-D | | | | 1.0 | | | | | |
| non-MBSF(0.005)-MBPD(1.0)-D | None | - | | 0.005 | | | | | |
| non-MBSF(1.0)-MBPD(1.0)-D | | | | 1.0 | | | | | |
| NaSO₃F(2.0)-ESF(0.005)-TVS(0.1)-D | NaSO₃F | 2.0 | C₂H₅SO₂F | 0.005 | | | | TVS | 0.1 |
| NaSO₃F(2.0)-ESF(1.0)-TVS(0.1)-D | | | | 1.0 | | | | | |
| non-ESF(0.005)-TVS(0.1)-D | None | - | | 0.005 | | | | | |
| non-ESF(1.0)-TVS(0.1)-D | | | | 1.0 | | | | | |
| NaSO₃F(2.0)-MBSF(0.005)-MSF(1.0)-D | NaSO₃F | 2.0 | CH₂(SO₂F)₂/MSF | 0.005/1.0 | | | | - | - |
| NaSO₃F(2.0)-MBSF(1.0)-MSF(1.0)-D | | | | 1.0/1.0 | | | | | |
| non-MBSF(0.005)-MSF(1.0)-D | None | - | | 0.005/1.0 | | | | | |
| non-MBSF(1.0)-MSF(1.0)-D | | | | 1.0/1.0 | | | | | |
| NaSO₃F(2.0)-MSF(1.0)-D | NaSO₃F | 20 | MSF | 1.0 | | | | | |

**Table 13**

| Test Example | Electrolyte Solution No. | Positive Electrode Active Material | Negative Electrode Active Material | Evaluation Results | | |
|---|---|---|---|---|---|---|
| | | | | Discharge Capacity Retention Rate [%] after High-temperature Cycle | Gas Generation Amount [%] during High-temperature Cycle | Recovered Discharge Capacity Retention Rate [%] after High-temperature Storage |
| Example 4-1 | NaSO₃F(2.0)-HDI(0.005)-DFPMSF(1.0)-D | NaNi_{0.5}Ti_{0.3}Mn_{0.2}O₂ | Hard Carbon | 131 | 45 | 111 |
| Example 4-2 | NaSO₃F(2.0)-HDI(1.0)-DFPMSF(1.0)-D | | | 139 | 27 | 118 |
| Comparative Example 4-1 | non-HDI(0.005)-DFPMSF(1.0)-D | | | 102 | 97 | 102 |
| Comparative Example 4-2 | non-HDI(1.0)-DFPMSF(1.0)-D | | | 106 | 93 | 103 |
| Example 4-3 | NaSO₃F(2.0)-MBSF(0.005)-MBPD(1.0)-D | | | 133 | 47 | 111 |
| Example 4-4 | NaSO₃F(2.0)-MBSF(1.0)-MBPD(1.0)-D | | | 145 | 29 | 119 |
| Comparative Example 4-3 | non-MBSF(0.005)-MBPD(1.0)-D | | | 103 | 95 | 103 |
| Comparative Example 4-4 | non-MBSF(1.0)-MBPD(1.0)-D | | | 111 | 97 | 105 |
| Example 4-5 | NaSO₃F(2.0)-ESF(0.005)-TVS(0.1)-D | | | 130 | 39 | 114 |
| Example 4-6 | NaSO₃F(2.0)-ESF(1.0)-TVS(0.1)-D | | | 134 | 26 | 121 |
| Comparative Example 4-5 | non-ESF(0.005)-TVS(0.1)-D | | | 102 | 87 | 104 |
| Comparative Example 4-6 | non-ESF(1.0)-TVS(0.1)-D | | | 108 | 83 | 106 |
| Example 4-7 | NaSO₃F(2.0)-MBSF(0.005)-MSF(1.0)-D | | | 136 | 53 | 108 |
| Example 4-8 | NaSO₃F(2.0)-MBSF(1.0)-MSF(1.0)-D | | | 144 | 34 | 119 |
| Comparative Example 4-7 | non-MBSF(0.005)-MSF(1.0)-D | | | 105 | 104 | 102 |
| Comparative Example 4-8 | non-MBSF(1.0)-MSF(1.0)-D | | | 116 | 101 | 107 |
| Example 4-9 | NaSO₃F(2.0)-MSF(1.0)-D | | | 133 | 56 | 107 |
| Comparative Example 2-10 | non-non-D | | | 100 | 100 | 100 |

From the results in Table 13, it was found that, when another additive was further contained, at least one selected from the group consisting of the discharge capacity retention rate after the high-temperature cycle, the effect of preventing the gas generation amount during the high-temperature cycle, and the recovered discharge capacity retention rate after high-temperature storage was further improved.

### INDUSTRIAL APPLICABILITY

According to the present disclosure, an electrolyte solution for a nonaqueous sodium ion battery capable of improving at least one selected from the group consisting of a cycle characteristic at a high temperature of 60°C or higher, (an effect of preventing) a gas generation amount during a high-temperature cycle test, and a high-temperature storage characteristic of the nonaqueous sodium ion battery, a nonaqueous sodium ion battery using the same, and a method for producing a nonaqueous sodium ion battery can be provided.

Although the present disclosure has been explained in detail and referring to specific embodiments, it will be apparent to a person skilled in the art that various changes and modifications can be made without departing from the spirit and the scope of the present disclosure.

The present application is based on a Japanese patent application filed on November 11, 2022 (patent application No. 2022-181330), and the contents of which are incorporated herein by reference.

## Claims

1. An electrolyte solution for a nonaqueous sodium ion battery, comprising
(I) a fluorosulfate,
(II) at least one selected from the group consisting of a compound having at least two isocyanate groups, a compound represented by the following formula (1), a compound represented by the following formula (2), and a compound represented by the following formula (5),
(III) a sodium salt, and
(IV) a nonaqueous solvent: 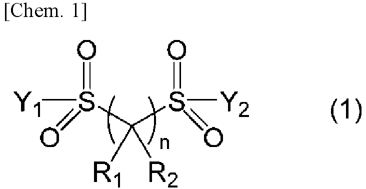
[wherein in the formula (1), n represents an integer of 1-4,
R₁ and R₂ each independently represent a hydrogen atom, a halogen atom, a hydrocarbon group having 1 to 10 carbon atoms (the hydrocarbon group may have at least one selected from the group consisting of a heteroatom and a halogen atom and may have a branched chain or a cyclic structure when the number of carbon atoms is 3 or more), an alkoxy group having 1-10 carbon atoms, an alkenyloxy group having 2-10 carbon atoms, an alkynyloxy group having 2 to 10 carbon atoms, a cycloalkoxy group having 3 to 10 carbon atoms, a cycloalkenyloxy group having 3 to 10 carbon atoms, or an aryloxy group having 6 to 10 carbon atoms, and
Y₁ and Y₂ each independently represent a halogen atom, a hydrocarbon group having 1 to 10 carbon atoms (the hydrocarbon group may have at least one selected from the group consisting of a heteroatom and a halogen atom and may have a branched chain or a cyclic structure when the number of carbon atoms is 3 or more), an alkoxy group having 1 to 10 carbon atoms, an alkenyloxy group having 2 to 10 carbon atoms, an alkynyloxy group having 2 to 10 carbon atoms, a cycloalkoxy group having 3 to 10 carbon atoms, a cycloalkenyloxy group having 3 to 10 carbon atoms, an aryloxy group having 6 to 10 carbon atoms, or -O⁻(M₁^{A+})ₐ, wherein M₁^{A+} represents a proton, a metal cation, or an onium cation, A represents a valence of the cation, and a represents a number satisfying A × a = 1] 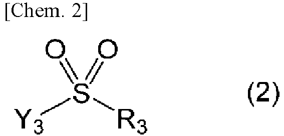
[wherein in the formula (2), R₃ represents a hydrocarbon group having 1 to 10 carbon atoms (the hydrocarbon group may have at least one selected from the group consisting of a heteroatom and a halogen atom and may have a branched chain or a cyclic structure when the number of carbon atoms is 3 or more), an alkoxy group having 1 to 10 carbon atoms (the alkoxy group may have a halogen atom), an alkenyloxy group having 2 to 10 carbon atoms, an alkynyloxy group having 2 to 10 carbon atoms, a cycloalkoxy group having 3 to 10 carbon atoms, a cycloalkenyloxy group having 3 to 10 carbon atoms, an aryloxy group having 6 to 10 carbon atoms, or -O⁻(M₂^{B+})_{b}, wherein M₂^{B+} represents a proton, a metal cation, or an onium cation, B represents a valence of the cation, and b represents a number satisfying B × b = 1, and
Y₃ represents a halogen atom, a hydrocarbon group having 1 to 10 carbon atoms (the hydrocarbon group may have at least one selected from the group consisting of a heteroatom and a halogen atom and may have a branched chain or a cyclic structure when the number of carbon atoms is 3 or more), an alkoxy group having 1 to 10 carbon atoms (the alkoxy group may have a halogen atom), an alkenyloxy group having 2 to 10 carbon atoms, an alkynyloxy group having 2 to 10 carbon atoms, a cycloalkoxy group having 3 to 10 carbon atoms, a cycloalkenyloxy group having 3 to 10 carbon atoms, an aryloxy group having 6 to 10 carbon atoms, or -O⁻(M₃^{E+})ₑ, wherein M₃^{E+} represents a proton, a metal cation, or an onium cation, E represents a valence of the cation, and e represents a number satisfying E × e = 1] 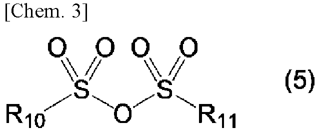
[wherein in the formula (5), R₁₀ and R₁₁ each independently represent a hydrogen atom, a halogen atom, a hydrocarbon group having 1 to 10 carbon atoms (the hydrocarbon group may have a heteroatom or a halogen atom and may have a branched chain or a cyclic structure when the number of carbon atoms is 3 or more), an alkoxy group having 1 to 10 carbon atoms (the alkoxy group may have a halogen atom), an alkenyloxy group having 2-10 carbon atoms, an alkynyloxy group having 2 to 10 carbon atoms, a cycloalkoxy group having 3 to 10 carbon atoms, a cycloalkenyloxy group having 3 to 10 carbon atoms, an aryloxy group having 6 to 10 carbon atoms, or -O⁻(M₅^{G+})_{g}, wherein M₅^{G+} represents a proton, a metal cation, or an onium cation, G represents a valence of the cation, and g represents a number satisfying G × g = 1, wherein R₁₀ and R₁₁ may be bonded to each other to form a cyclic structure.]

2. The electrolyte solution for a nonaqueous sodium ion battery according to claim 1, wherein a content x of (I) satisfies 0.008 mass% ≤ x ≤ 7.5 mass% with respect to a total amount of the electrolyte solution for a nonaqueous sodium ion battery.

3. The electrolyte solution for a nonaqueous sodium ion battery according to claim 1, wherein a counter cation of (I) is a lithium ion, a sodium ion, a potassium ion, a tetraalkylammonium ion, a tetraalkylphosphonium ion, or an ammonium ion having a spiro skeleton.

4. The electrolyte solution for a nonaqueous sodium ion battery according to claim 1, wherein a content y of (II) satisfies 0.08 mass% ≤ y ≤ 5.5 mass% with respect to a total amount of the electrolyte solution for a nonaqueous sodium ion battery.

5. The electrolyte solution for a nonaqueous sodium ion battery according to claim 1, wherein the compound having at least two isocyanate groups is at least one selected from the group consisting of pentamethylene diisocyanate and hexamethylene diisocyanate.

6. The electrolyte solution for a nonaqueous sodium ion battery according to claim 1, wherein the compound represented by the formula (1) is at least one selected from the group consisting of CH₂(SO₂F)₂, CH₂(SO₂F)(SO₂ONa), CH₂(SO₂F)(SO₂OCH₃), C(CH₃)₂(SO₂F)₂, C(F)₂(SO₂F)₂, CH₂CH₂(SO₂F)₂, CF₂CF₂(SO₂F)₂, CH₂CH₂(SO₂F)(SO₂OLi), CH₂CH₂(SO₂F)(SO₂OCH₂CCH), CH₂(SO₂CF₃)₂, CH₂(SO₂CF₃)(SO₂ONa), and CH₂(SO₂CF₃)(SO₂OCH₃).

7. The electrolyte solution for a nonaqueous sodium ion battery according to claim 1, wherein the compound represented by the formula (1) is at least one selected from the group consisting of CH₂(SO₂F)₂, CH₂(SO₂F)(SO₂ONa), CH₂CH₂(SO₂F)₂, CH₂(SO₂CF₃)₂, and CH₂(SO₂CF₃)(SO₂ONa).

8. The electrolyte solution for a nonaqueous sodium ion battery according to claim 1, wherein the compound represented by the formula (2) is at least one selected from the group consisting of CH₃SO₂F, C₂H₅SO₂F, CH₂=CH-SO₂F, CF₃CH₂CH₂SO₂F, cyclohexylsulfonyl fluoride (C₆H₁₁SO₂F), phenylsulfonyl fluoride (C₆H₅SO₂F), CH₃OSO₂F, CH₃CH₂OSO₂F, CH₂=CH-OSO₂F, CF₃CH₂OSO₂F, (CH₃)₂CH-OSO₂F, (CF₃)₂CH-OSO₂F, CH₃CH₂SO₂CF₃, CH₂=CH-SO₂CF₃, CF₃CH₂CH₂SO₂CF₃, CH₃OSO₂CF₃, CH₃CH₂OSO₂CF₃, NaO-SO₂CH₃, and NaO-SO₂CF₃.

9. The electrolyte solution for a nonaqueous sodium ion battery according to claim 1, wherein the compound represented by the formula (2) is at least one selected from the group consisting of CH₃SO₂F, C₂H₅SO₂F, CH₂=CH-SO₂F, CH₃OSO₂F, CH₂=CH-OSO₂F, CH₃OSO₂CF₃, NaO-SO₂CH₃, and NaO-SO₂CF₃.

10. The electrolyte solution for a nonaqueous sodium ion battery according to claim 1, wherein the compound represented by the formula (5) is at least one selected from the group consisting of methanesulfonic anhydride, 1,2,5-oxadithiolane-2,2,5,5-tetraoxide, and 1,3,2,4-dioxadithiane-2,2,4,4-tetraoxide.

11. The electrolyte solution for a nonaqueous sodium ion battery according to any one of claims 1 to 10 comprising at least one selected from the group consisting of a cyclic ester, a chain ester, a cyclic ether, and a chain ether as the nonaqueous solvent.

12. The electrolyte solution for a nonaqueous sodium ion battery according to any one of claims 1 to 10, wherein the sodium salt is at least one selected from the group consisting of NaPF₆, NaBF₄, NaBF₂(C₂O₄), NaPF₄(C₂O₄), NaPF₂(C₂O₄)₂, NaSbF₆, NaAsF₆, NaClO₄, NaN(SO₂F)₂, NaN(SO₂CF₃)₂, NaN(SO₂F)(SO₂CF₃), NaN(CₐF₂ₐ₊₁SO₂)(C_{b}F_{2b+1}SO₂) (wherein a and b are integers satisfying 2 ≤ a ≤20 and 2 ≤b ≤20), NaSO₃CF₃, NaSO₃C₄F₉, NaN(POF₂)₂, NaN(POF₂)(SO₂F), NaPO₂F₂, NaC(SO₂CF₃)₃, NaPF₃(C₃F₇)₃, NaB(CF₃)₄, NaBF₃(C₂F₅), NaAlO₂, NaAlCl₄, NaCl, and NaI.

13. The electrolyte solution for a nonaqueous sodium ion battery according to any one of claims 1 to 10, wherein a concentration z of (III) satisfies 0.3 mol/L ≤ z ≤ 5.0 mol/L with respect to a total amount of the electrolyte solution for a nonaqueous sodium ion battery.

14. The electrolyte solution for a nonaqueous sodium ion battery according to any one of claims 1 to 10, further comprising at least one compound selected from the group consisting of a compound represented by the following formula (3) and a compound represented by the following formula (4): 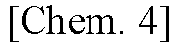 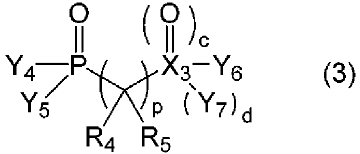
[wherein in the formula (3), p represents an integer of 1-4,
R₄ and R₅ each independently represent a hydrogen atom, a halogen atom, a hydrocarbon group having 1 to 10 carbon atoms (the hydrocarbon group may have at least one selected from the group consisting of a heteroatom and a halogen atom and may have a branched chain or a cyclic structure when the number of carbon atoms is 3 or more), an alkoxy group having 1 to 10 carbon atoms, an alkenyloxy group having 2 to 10 carbon atoms, an alkynyloxy group having 2 to 10 carbon atoms, a cycloalkoxy group having 3 to 10 carbon atoms, a cycloalkenyloxy group having 3 to 10 carbon atoms, or an aryloxy group having 6 to 10 carbon atoms,
X₃ represents a phosphorus atom or a sulfur atom, when X₃ is a phosphorus atom, c = 1, and d = 1, and when X₃ is a sulfur atom, c = 2, and d = 0, and
Y₄ to Y₇ each independently represent a halogen atom, a hydrocarbon group having 1 to 10 carbon atoms (the hydrocarbon group may have at least one selected from the group consisting of a heteroatom and a halogen atom and may have a branched chain or a cyclic structure when the number of carbon atoms is 3 or more), an alkoxy group having 1 to 10 carbon atoms, an alkenyloxy group having 2 to 10 carbon atoms, an alkynyloxy group having 2 to 10 carbon atoms, a cycloalkoxy group having 3 to 10 carbon atoms, a cycloalkenyloxy group having 3 to 10 carbon atoms, an aryloxy group having 6 to 10 carbon atoms, or -O⁻(M₄^{F+})_{f}, wherein M₄^{F+} represents a proton, a metal cation, or an onium cation, F represents a valence of the cation, and f represents a number satisfying F × f = 1] 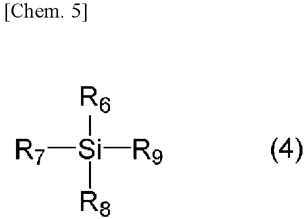
[wherein in the formula (4), R₆ to R₉ each independently represent a hydrogen atom, a halogen atom, a hydrocarbon group having 1 to 10 carbon atoms (the hydrocarbon group may have at least one selected from the group consisting of a heteroatom and a halogen atom and may have a branched chain or a cyclic structure when the number of carbon atoms is 3 or more), an alkoxy group having 1 to 10 carbon atoms (the alkoxy group may have a halogen atom), an alkenyloxy group having 2 to 10 carbon atoms, an alkynyloxy group having 2 to 10 carbon atoms, a cycloalkoxy group having 3 to 10 carbon atoms, a cycloalkenyloxy group having 3 to 10 carbon atoms, or an aryloxy group having 6 to 10 carbon atoms.]

15. A nonaqueous sodium ion battery comprising at least a positive electrode, a negative electrode, and the electrolyte solution for a nonaqueous sodium ion battery according to any one of claims 1 to 10.

16. A method for producing a nonaqueous sodium ion battery, comprising
a step of preparing the electrolyte solution for a nonaqueous sodium ion battery according to any one of claims 1 to 10, and
a step of filling an empty cell having at least a positive electrode and a negative electrode with the electrolyte solution for a nonaqueous sodium ion battery.
